# EUROPÄISCHE PATENTSCHRIFT

(11) **EP 1 991 408 B1**
(45) Veröffentlichungstag und Bekanntmachung des Hinweises auf die Patenterteilung: **19.05.2010**
(21) Anmeldenummer: 07701342.3
(22) Anmeldetag: 01.03.2007
(51) Int. Cl.: B29C 45/17, B29C 45/56

(54) **VERFAHREN SOWIE SPRITZGUSSWERKZEUG ZUR HERSTELLUNG EINES TRAGELEMENTES, INSBESONDERE EINER TRANSPORTPALETTE**
METHOD AND INJECTION MOULD FOR PRODUCING A CARRIER ELEMENT, ESPECIALLY A TRANSPORT PALLET
PROCÉDÉ ET MOULE À INJECTION POUR PRODUIRE UN ÉLÉMENT SUPPORT, NOTAMMENT UNE PALETTE DE TRANSPORT

(30) Priorität: 01.03.2006 AT 3442006
(43) Veröffentlichungstag der Anmeldung: 19.11.2008
(73) Patentinhaber: Haidlmair Holding GmbH, 4542 Nussbach (AT)
(72) Erfinder: WEIERMEIER, Gerhard, A-4560 KIrchdorf an der Krems (AT)
(74) Vertreter: Secklehner, Günter
(86) Internationale Anmeldenummer: PCT/AT2007/000101
(87) Internationale Veröffentlichungsnummer: WO 2007/098517

(56) Entgegenhaltungen:
- EP-A2- 1 348 533
- JP-A- 63 135 221
- JP-A- 2006 159 531
- US-A- 5 422 061

## Beschreibung

Die Erfindung bezieht sich auf ein Verfahren zur Herstellung eines Tragelements, insbesondere einer Transportpalette, aus einem Kunststoffmaterial, bei welchem in einem Spritzgusswerkzeug umfassend zumindest zwei Formhälften in der geschlossenen Stellung derselben ein Formhohlraum mit diesen begrenzenden Formwänden ausgebildet wird und die erste Formhälfte relativ gegenüber der weiteren Formhälfte verstellbar ausgebildet wird und dabei ein Volumen des Formhohlraums ausgehend von einem minimalen Ausgangsvolumen in einer Ausgangsstellung auf ein maximales Zwischenvolumen in einer Zwischenstellung und nachfolgend auf ein bezüglich des maximalen Zwischenvolumens dazu geringeres Endvolumen in einer Endstellung verstellt wird und in den Formhohlraum das zur Bildung des Tragelements vorgesehene Kunststoffmaterial eingebracht wird, wobei der Formhohlraum zumindest während dem Einspritzvorgang des Kunststoffmaterials zur Bildung des Tragelements auf einen bezüglich des Umgebungsdrucks geringeren Druck abgesenkt wird.

Aus der EP 1 348 533 A2 ist die Herstellung eines Tragkörpers mit einer zusätzlich daran angeordneten, bevorzugt durchsichtigen Lage, die als Linse ausgebildet ist, bekannt. Dabei wird der zur Aufnahme des Kunststoffirzaterials und zur Bildung der Lage vorgesehene Formhohlraum vor und/oder während dem Einspritzvorgang auf einen gegenüber dem äußeren Umgebungsdruck dazu geringeren Druck abgesenkt. Weiters erfolgt eine Verstellung des Hohlraums ausgehend von einem minimalen Ausgangsvolumen auf ein maximales Zwischenvolumen, welches nachfolgend auf ein bezüglich des maximalen Zwischenvolumens dazu geringeres Endvolumen zur endgültigen Formgebung der Lage verstellt wird. Durch diese Verstellbewegung wird der Werkstoff zur Bildung der Lage an den Grundkörper durch einen Schweißvorgang angeformt.

Die US 5,422,061 A beschreibt ein Verfahren sowie eine Anlage mit einer Spritzgussform zur Herstellung von Bauteilen. Die Spritzgussform weist zwei Formhälften auf, die in der geschlossenen Stellung einen Formhohlraum umgrenzen. Dieser steht mit einer Vakuumpumpe in Strömungsverbindung, wodurch der Formhohlraum auf einen gegenüber dem äußeren Umgebungsdruck geringeren Druck abgesenkt werden kann.

Weiters beschreibt die JP 63-135221 A eine Spritzgussform aus einer feststehenden und einer dazu relativ verstellbaren Formhälfte, wobei diese in der geschlossenen Stellung einen Formhohlraum umgrenzen. Dabei wird die Verstellgeschwindigkeit der verstellbaren Form für vorbestimmte Verstellwege zueinander unterschiedlich gewählt, wobei hier die letzten 5 bis 10 mm vor dem Erreichen der Endstellung mit einer zur ersten Verstellgeschwindigkeit geringeren Verstellgeschwindigkeit durchgeführt wird. Während der langsameren Verstellbewegung wird der Formhohlraum evakuiert und gleichzeitig dabei das aufbereitete Kunststoffmaterial unter geringem Einspritzdruck in den Formhohlraum eingespritzt. Der Schließvorgang der Formhälften erfolgt dabei weiter mit geringer Verstellbewegung. Durch diese geringe Verstellbewegung bis hin zum Erreichen der Endstellung wird das eingebrachte Kunststoffmaterial im Formhohlraum verteilt. Am Ende des Verstellvorganges füllt der aufgeschmolzene Kunststoff den Formhohlraum vollständig aus und bildet damit den herzustellenden Bauteil aus. Dieser Vorgang wird auch als sogenanntes Spritzprägen bezeichnet. Nach entsprechender Kühlung wird der hergestellte Bauteil aus dem Formhohlraum mittels einer Auswerfervorrichtung ausgegeben.

Aus der WO 2004/098856 A1 ist ein Verfahren zur Herstellung von Bauteilen aus einem Kunststoffmaterial bekannt geworden, bei welchem der Bauteil eine Kernschicht aus einem expandierten Kunststoffschaum mit einer Dichte bzw. einem Raumgewicht in der Größe zwischen 50 kg/m³ und 600 kg/m³ aufweist. Diese Kernschicht ist von einer festen, dichten äußeren Randschicht mit einer Dichte bzw. einem Raumgewicht von > 700 kg/m³ umgeben. Zur Herstellung wird ein vorbestimmtes Volumen des aufgeschmolzenen, thermoplastischen Materials in einen geschlossenen Formhohlraum eingespritzt. In diesem aufgeschmolzenen Kunststoffmaterial sind Treibmittel zum Aufschäumen eingebracht. Nach dem Einbringen wird durch das Treibmittel das thermoplastische Material an die Formflächen der Spritzgussform angelegt und dabei die äußere härtere Randschicht ausgeformt. Im weiteren Herstellungsprozess wird ein erster Teilbereich zurückverstellt und damit dieser Teil des Formhohlraums in seinem Volumen vergrößert. Ein zweiter Teil der Form verbleibt hingegen unverändert in der geschlossenen Position. Durch diesen Öffnungsvorgang des ersten Teilbereiches der Spritzgussform sinkt der Druck im Formhohlraum. Dadurch wird das im thermoplastischen Kunststoffmaterial eingelagerte Treibmittel aktiv und bewirkt ein weiters Aufschäumen des Kunststoffmaterials. Durch die Wirkung des Treibmittels wird wiederum der vergrößerte Hohlraum ausgefüllt und die Randschichten des Bauteils an die Verformwände angelegt. Das aufgeschmolzene, thermoplastische Material wird anschließend gekühlt und so weit verfestigt, dass die Spritzgussform geöffnet und der Bauteil aus dieser entnommen werden kann.

Aus der EP 0 664 196 B1 ist ein Verfahren sowie eine Vorrichtung zur Herstellung eines Kunststoffkörpers bekannt geworden, bei welchem die Form eine erste sowie eine zweite Formhälfte aufweist. Diese umgrenzen beim gegeneinander verschieben und gegenseitigen Dichteingriff einen Formhohlraum, welcher die Raumform des herzustellenden Kunststoffformkörpers ausbildet. Der Kunststoffmasse wird ein Treibmittel zugesetzt bzw. mit diesem vermischt und so eine Einspritzmischung gebildet. Zur Bildung des Formhohlraums werden die erste und die zweite Formhälfte gegeneinander verstellt, wodurch sich zwischen diesen der Formhohlraum mit einem Anfangsvolumen ausbildet. Die aufbereitete Einspritzmischung wird anschließend in den Formhohlraum eingespritzt und kann an den Innenseiten des Formhohlraums abkühlen und bildet dadurch eine Haut aus. Anschließend daran wird die erste Formhälfte und die zweite Formhälfte voneinander weg bewegt, wodurch das Anfangsvolumen des Formhohlraums auf ein Zwischenvolumen vergrößert wird. Dadurch kann die Einspritzmischung expandieren. Anschließend daran werden wieder die erste und die zweite Formhälfte aufeinander zu bewegt; wodurch das Zwischenvolumen des Formhohlraums auf ein Kompressionsvolumen verringert wird. In dieser Stellung wird die Einspritzmischung vollständig abgekühlt und anschließend daran der fertige Kunststoffkörper aus dem Formhohlraum entnommen. Dabei konnte nicht in allen Anwendungsfällen ein ausreichend stabiler Kunststoffkörper geschaffen werden.

Aus der EP 1 013 390 A1 ist ein Verfahren zum Spritzgießen von expandierbaren Kunststoffkomponenten bekannt geworden, mit welchem ein Kunststoffkörper geschaffen werden soll, welcher bei geringem Gewicht eine ausreichende Isolierwirkung aufweist. Dabei weist die äußere Schicht eine gering aufgeschäumte, dichte Struktur auf, wobei der Kernbereich einen hoch aufgeschäumten und porigen Teilabschnitt darstellt.

Ein weiteres Verfahren zur Herstellung von aufgeschäumten Produkten ist aus der US 6,893, 587 B2 bekannt geworden, bei welchem der Kunststoff in einem Formhohlraum bereits vor dem kompletten Schließen des Formhohlraumes bis unmittelbar danach eingebracht wird. Darauf hin wird an der Oberfläche des eingebrachten Kunststoffschaums eine Schicht in Form einer Haut ausgebildet und anschließend daran der Formhohlraum zum Aufschäumen des Kembereiches vergrößert. Nach dem vollständigen Aufschäumen wird der hergestellte Körper entsprechend abgekühlt. Dabei wird ein Anteil zwischen 50 % und 80 % des gesamt benötigten Volumens zur Ausbildung des Formteils vor dem endgültigen Schließen des Formhohlraums in diesen eingebracht.

Der vorliegenden Erfindung liegt die Aufgabe zugrunde, ein Verfahren zur Herstellung eines Tragelements, wie einer Transportpalette, zu schaffen, bei welchem ohne hohen Zusatzaufwand die Oberflächengüte des Tragelements verbessert wird und darüber hinaus bezüglich der von diesem aufzunehmenden Lasten ein günstiges Verhältnis zu seinem Eigengewicht aufweist. Weiters soll ein Spritzgusswerkzeug geschaffen werden, welches die Herstellung derartig ausgebildeter Transportpaletten einfach ermöglicht.

Diese Aufgabe der Erfindung wird dadurch gelöst, dass bei Erreichen eines Füllvolumen des Formhohlraums bezüglich seines minimalen Ausgangsvolumens in der Ausgangsstellung in einer unteren Grenze von 55%, bevorzugt 70%, und einer oberen Grenze von 98%, bevorzugt 90%, bereits der Verstellvorgang des Formhohlraums ausgehend von seinem minimalen Ausgangsvolumen hin zu seinem maximalen Zwischenvolumen begonnen wird. Vorteilhaft ist dabei, dass im Zusammenwirken mit dem evakuierten Formhohlraum bereits auch bei einem geringeren Füllgrad des Formhohlraums mit der Öffnungsbewegung begonnen werden kann, da bereits zu diesem Zeitpunkt das in den Formhohlraum eingebrachte Kunststoffmaterial zum größten Teil an den Formwänden angelegt worden ist. Da bereits zu diesem Zeitpunkt die äußere Randschicht zum größten Teil ausgebildet worden ist, erfolgt eine noch durchzuführende Verformung währen der Verstellbewegung durch den elastischen Zustand des Kunststoffmaterials leichter und es wird zusätzlich noch ein besserer Aufschäumvorgang des Kembereiches erzielt. So wird bei diesem Vorgehen der im Spritzgusswerkzeug in der geschlossenen Stellung ausgebildete Formhohlraum rasch vom aufgeschmolzenen bzw. aufbereiteten Kunststoffmaterial zur Bildung des Tragelements an die Formwände der Spritzgussform bzw. des Spritzgusswerkzeuges angelegt, wodurch innerhalb kürzester Zeit ein hoher Füllgrad erzielbar ist. Dabei werden auch mögliche Lufteinschlüsse innerhalb des Formhohlraums vermieden. Durch diesen nunmehr sehr rasch stattfindenden Füllvorgang kommt es bereits nach kürzester Füllzeit zu einer Anlage des Kunststoffmaterials an den Formwänden, wobei bereits in diesen Randschichten eine minimale Schichtbildung erfolgt. Es erfolgt dabei ein regelrechtes Ansaugen der erweichten Kunststoffmasse an die Formwände der Spritzgussform. Damit ist es möglich, mit dem nachfolgenden Öffnungsvorgang und der damit verbundenen Vergrößerung des Formhohlraums bereits nach kurzer Einspritzdauer beginnen zu können, da das eingebrachte aufgeschmolzene Kunststoffmaterial bereits zur Anlage an den Formwänden gebracht worden ist. Weiters wird nach dem Einspritzvorgang ein Aufschäumen des Kunststoffmaterials im Kembereich des Tragelements ermöglicht und durch das anschließende Verkleinern des Formhohlraums die äußere Randschicht in ihrem, bezüglich des Kernbereichs festeren und härteren Zustand ausgebildet. Durch dieses über den Verstellvorgang stetige Anliegen des Kunststoffmaterials wird eine hohe Oberflächenqualität in Bezug auf Glattheit erzielt.

Vorteilhaft ist bei den im Anspruch 2 gewählten Verfahrensschritten, dass so bereits vor dem Einspritzvorgang ein größeres Luftvolumen aus dem Formhohlraum abgesaugt werden kann und dadurch Lufteinschlüsse noch besser vermieden werden können, wodurch die Oberflächenqualität verbessert und die Zykluszeiten noch zusätzlich herabgesetzt werden können.

Weiters ist ein Vorgehen gemäß den im Anspruch 3 angegebenen Merkmalen vorteilhaft, weil dadurch das Aufschäumverhalten des Kernbereiches des Tragelements individuell an unterschiedlichste Einsatzbedingungen des Tragelements eingestellt werden kann. Darüber hinaus kann rasch auf unterschiedliche Fertigungsbedingungen Bedacht genommen werden und so Tragelemente für unterschiedliche Belastungshöhen geschaffen werden.

Vorteilhaft ist auch eine Verfahrensvariante gemäß Anspruch 4, weil dadurch die Dichte des aufgeschäumten Kernbereiches und die Schichtstärke sowie Dichte der äußeren Randschicht exakt festgelegt werden können.

Vorteilhaft ist bei dem im Anspruch 5 gewählten Verfahrensschritten, dass dadurch die Dichteunterschiede bzw. die unterschiedlichen Raumgewichte zwischen dem Kernbereich und der Randschicht besser aufeinander eingestellt werden können.

Weiters ist ein Vorgehen gemäß den in Anspruch 6 angegebenen Merkmale vorteilhaft, da dadurch das gesamte Einspritzvolumen in den angegebenen Grenzen des Öffnungsweges bereits in den Formhohlraum eingebracht worden ist und so für den restlichen Öffnungsweg das vollständige Einspritzvolumen und damit verbunden auch das eingelagerte Treibmittel zur Aufschäumung bereitgestellt wird.

Eine weitere vorteilhafte Vorgehensweise ist im Anspruch 7 beschrieben, da dadurch über die gesamte äußere Oberfläche des herzustellenden Tragelements eine satte Anlage an den Formwänden erfolgt und dadurch eine höhere Oberflächengüte im Bezug auf Glattheit sowie Aussehen erzielbar ist.

Vorteilhaft ist auch eine Verfahrensvariante gemäß Anspruch 8, da dadurch ein Spritzgusswerkzeug geschaffen werden kann, bei welchem die beiden Formhälften relativ zueinander in ihrer Lage verstellt werden können und dadurch auf die Antriebsbewegung, ausgehend von Spritzmaschinen öder ähnlichem, verzichtet werden kann. Damit ist es möglich, die beiden Formhälften relativ zueinander noch exakter zu verlagern bzw. den von diesem umschlossenen Formhohlraum in seinem Volumen zu verstellen. Durch das Vorsehen mehrerer Verstellmittel wird auch bei größeren herzustellenden Tragelementen eine sehr exakte Verstellbarkeit und somit eine hohe Formgenauigkeit des Tragelements erzielt.

Weitere vorteilhafte Verfahrensschritte sind im Anspruch 9 beschrieben. Damit kann ein Spritzgusswerkzeug bereitgestellt werden, bei welchem die beiden Formhälften relativ gegen-. über einem, zwischen diesen angeordneten Formmittelteil zueinander durch die Verstellmittel gleichzeitig und exakt verlagert werden können. Durch diese Ausbildung können auch Tragelemente mit einer größeren Außenabmessung, wie dies beispielsweise bei der Herstellung von Europaletten der Fall ist, hergestellt werden. Durch die den beiden Formhälften zugeordneten und zwischen diesen unter Zwischenschaltung des Formmittelteils vorgesehenen Verstellmitteln wird wiederum eine sehr exakte Verstellung zueinander erzielt, wodurch hohe Formgenauigkeiten für die Herstellung des Tragelements möglich sind. Durch die Anordnung mehrerer Verstellmittel wird auch ein gegenseitiges Verkanten der beiden Formhälften bei der Bildung des Formhohlraums gemeinsam mit dem Formmittelteil verhindert.

Die Erfindung betrifft weiters aber auch ein Spritzgusswerkzeug zur Herstellung eines Tragelements, insbesondere einer Transportpalette, aus einem Kunststoffmaterial, wobei das Spritzgusswerkzeug zwei Formhälften umfasst, welche in der geschlossenen Stellung einen Formhohlraum umgrenzen und die erste Formhälften relativ gegenüber der weiteren Formhälfte verstellbar ausgebildet ist, wobei zwischen den beiden Formhälften mehrere Verstellmittel vorgeschen sind und diese Verstellmittel gleichzeitig die relative Verlagerung der ersten Formhälfte bezüglich der weiteren Formhälfte bewirken und dass in den Formhohlraum zumindest eine Leitung einmündet, welche mit einem Unterdruckerzeuger in Strömungsverbindung steht.

Die Aufgabe der Erfindung wird hier eigenständig dadurch gelöst, dass die Verstellmittel durch Zahnstangen-Antriebe gebildet sind.

Die sich aus der Merkmalskombination dieses Anspruches ergebenden Vorteile liegen darin, dass dadurch mit einfachen mechanischen Mitteln ein derartiger Bewegungsablauf bei hoher Präzision erzielbar ist. So kann ein Spritzgusswerkzeug geschaffen werden, bei welchem die beiden Formhälften relativ zueinander in ihrer Lage verstellt werden können und dadurch auf die Antriebsbewegung, ausgehend von Spritzgussmaschinen oder Ähnlichem, verzichtet werden kann. Damit ist es möglich die beiden Formhälften relativ zueinander noch exakter zu verlagern bzw. den von diesem umschlossenen Formhohlraum in seinem Volumen zu verstellten. Durch das Vorsehen mehrerer Verstellmittel wird auch bei größeren herzustellenden Tragelementen eine sehr exakte Verstellbarkeit und somit eine hohe Formgenauigkeit des Tragelements erzielt. Dadurch, dass aus Formhohlraum in Abhängigkeit vom Herstellvorgang des Tragelements jederzeit vorhandene Luft abgesaugt werden kann, wird der auf das eingebrachte Kunststoffmaterial wirkende Gegendruck verringert. Dadurch wird neben einer kürzeren Einspritzzeit auch noch die Möglichkeit geschaffen, nach dem Einbringen und dem oberflächlichen Verfestigen des Kunststoffmaterials den Formhohlraum zu vergrößern, und dabei das Nachformen des Kunststoffmaterials durch den im Inneren stattfindenden Aufschäumvorgang zu begünstigen. Dadurch wird die bereits ausgebildete Oberflächenschicht an die verstellten Formwände je nach gewähltem Unterdruck angesaugt und die Zykluszeit damit verkürzt. Dadurch werden aber auch die Oberflächenqualität und damit verbunden das Erscheinungsbild wesentlich verbessert. Weiters wird dadurch auch noch die Reinigung erleichtert, da eine glatt ausgebildete Oberfläche einfacher und leichter gegenüber einer mit Riefen oder Vertiefungen versehenen Oberfläche zu reinigen ist.

Weiters ist es vorteilhaft, wenn das Spritzgusswerkzeug zusätzlich zu den zwei Formhälften einen dazwischen angeordneten Formmittelteil umfasst und diese in der geschlossenen Stellung den Formhohlraum umgrenzen und die beiden Formhälften relativ gegenüber dem Formmittelteil verstellbar ausgebildet sind, wobei zwischen den beiden Formhälften mehrere Verstellmittel vorgesehen sind und diese Verstellmittel die relative Verlagerung der beiden Formhälften bezüglich des Formmittelteils synchron sowie in gegensinniger Bewegungsrichtung bewirken. Die Vorteile liegen darin, dass so ein Spritzgusswerkzeug geschaffen worden ist, bei welchem die beiden Formhälften relativ gegenüber einem zwischen diesen angeordneten Formmittelteil zueinander durch die Verstellmittel verlagert werden können. Damit wird eine bezüglich des Formmittelteils gleichmäßige Öffnungs- und Schließbewegung der Formhälften und des damit verbundenes Formhohlraums erzielt. Der Antrieb erfolgt durch bekannte und in ihrer Wirkung exakte Antriebsmittel. Dabei erfolgt durch das gemeinsame Antriebsrad eine zwangsweise Antriebsverbindung zwischen den zueinander verlagernden Formhälften. Durch diese Ausbildung wird ein Spritzgusswerkzeug geschaffen, in welchem Tragelemente auch mit einer größeren Außenabmessung, wie dies beispielsweise bei der Herstellung von Euro-Paletten der Fall ist, ermöglicht wird. Durch die den beiden Formhälften zugeordneten und zwischen diesen vorgesehenen Verstellmittel wird wiederum eine sehr exakte Verstellung zueinander erzielt, wodurch hohe Formgenauigkeiten für die Herstellung des Trageelements möglich sind. Durch die Anordnung mehrer Verstellmittel wird auch ein gegenseitiges Verkanten der beiden Formhälften bei der Bildung des Formhohlraums gemeinsam mit dem Formmittelteil verhindert. Dadurch, dass aus Formhohlraum in Abhängigkeit vom Herstellvorgang des Tragelements jederzeit vorhandene Luft abgesaugt werden kann, wird der auf das eingebrachte Kunststoffmaterial wirkende Gegendruck verringert. Dadurch wird neben einer kürzeren Einspritzzeit auch noch die Möglichkeit geschaffen, nach dem Einbringen und dem oberflächlichen Verfestigen des Kunststoffmaterials den Formhohlraum zu vergrößern, und dabei das Nachformen des Kunststoffmaterials durch den im Inneren stattfindenden Aufschäumvorgang zu begünstigen. Dadurch wird die bereits ausgebildete Oberflächenschicht an die verstellten Formwände je nach gewähltem Unterdruck angesaugt und die Zykluszeit damit verkürzt. Dadurch werden aber auch die Oberflächenqualität und damit verbunden das Erscheinungsbild wesentlich verbessert. Weiters wird dadurch auch noch die Reinigung erleichtert, da eine glatt ausgebildete Oberfläche einfacher und leichter gegenüber einer mit Riefen oder Vertiefungen versehenen Oberfläche zu reineigen ist.

Durch die Ausbildung nach Anspruch 12 ist es möglich, das Aufschäumvcrhalten des Kembereiches des Tragelements individuell an unterschiedlichste Einsatzbedingungen des Tragelements einzustellen. Darüber hinaus kann rasch auf unterschiedliche Fertigungsbedingungen Bedacht genommen werden und so Tragelemente für unterschiedliche Belastungshöhen geschaffen werden.

Bei der Ausbildung gemäß Anspruch 13 wird eine zentrale Steuerungsmöglichkeit geschaffen, wodurch die einzelnen Antriebe aufeinander exakt abgestimmt angetrieben werden können.

Schließlich ist auch eine Ausbildung nach Anspruch 14 vorteilhaft, da dadurch bei der Ausbildung von zwei Tragplatten auch der zwischen diesen auszubildende Hohl- bzw. Freiraum ausgeformt werden kann. Darüber hinaus wird auch noch die Entformbarkeit durch entsprechende Ausbildung der Kernteile wesentlich vereinfacht.

Die Erfindung wird im nachfolgenden anhand der in den Zeichnungen dargestellten Ausführungsbeispiele näher erläutert.

Es zeigen:
- Fig. 1: ein erfindungsgemäßes Tragelement in Draufsicht und vereinfachter, schematischer Darstellung;
- Fig. 2: das Tragelement nach Fig. 1 in Ansicht geschnitten, gemäß den Linien II-II in Fig. 1;
- Fig. 3: einen Teilbereich des Tragelements nach den Fig. 1 und 2, in Ansicht geschnitten, gemäß den Linien III-III in Fig. 1 und in schematisch vergrößerter Darstellung; .
- Fig. 4: eine weitere mögliche Ausbildung des Stützelements beim Tragelement gemäß Fig. 1, in Ansicht geschnitten gemäß den Linien IV-IV in Fig. 1;
- Fig. 5: eine andere Ausbildung eines Tragelements in Draufsicht und vereinfachter schematischer Darstellung;
- Fig. 6: das Tragelement nach Fig. 5 in Ansicht;
- Fig. 7: eine weitere mögliche Ausbildung eines Tragelements in Draufsicht und vereinfachter Darstellung;
- Fig. 8: das Tragelement nach Fig. 7 in Ansicht;
- Fig. 9: eine mögliche Ausbildung von Stapelmitteln zwischen den Tragelementen, in Ansicht und schematisch vereinfachter sowie vergrößerter Darstellung;
- Fig. 10: eine andere Ausbildung von Stapelmitteln zwischen den Tragelementen, in Ansicht geschnitten und schematisch vereinfacht vergrößerter Darstellung;
- Fig. 11 1: ein Spritzgusswerkzeug zur Herstellung eines Tragelements in Ansicht geschnitten und stark schematisch vereinfachter Darstellung;
- Fig. 12: eine andere Ausbildung eines Spritzgusswerkzeugs zur Herstellung eines Tragelements in Ansicht geschnitten und stark vereinfacht schematischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

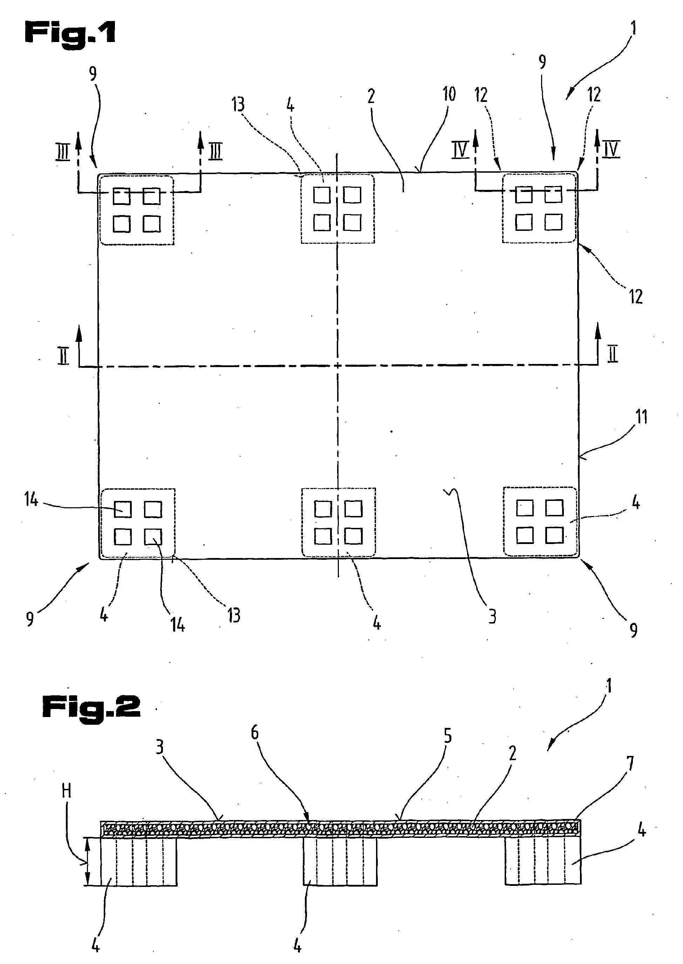

In den Fig. 1 bis 4 ist eine mögliche und gegebenenfalls für sich eigenständige Ausbildung eines Tragelements 1 aus einem Kunststoffmaterial gezeigt. Dieses Tragelement 1 kann in Form einer Transportpalette, wie beispielsweise einer Euro-Palette oder Ähnlichem, ausgebildet sein: Bei der Europalette ist bekannt, diese aus einem Holzwerkstoff zu bilden.

Dabei umfasst das hier gezeigte Tragelement 1 mindestens eine erste Tragplatte 2, welche an seiner Seite - hier die dem Betrachter zugewandte Oberseite - eine Aufnahmefläche 3 für darauf aufzunehmende, jedoch hier nicht näher dargestellte Waren aufweist. Weiters umfasst das Tragelement 1 mehrere an der von der Aufnahmefläche 3 abgewendeten Seite angeordnete und die Tragplatte 2 überragende Stützelemente 4.

Das von der Tragplatte 2 sowie den Stützelementen 4 gebildete Tragelement 1 weist eine diese Raumform umgrenzende bzw. begrenzende Oberfläche 5 sowie einen von dieser Oberfläche 5 umhüllten und davon distanzierten Kembereich 6 auf.

Weiters ist hier noch vereinfacht dargestellt, dass zumindest die Tragplatte 2 im Bereich der Oberfläche 5 eine Schicht 7 mit einer höheren Dichte gegenüber dem Kernbereich 6 aufweist. Diese Dichteunterschiede sind vereinfacht durch unterschiedliche Schraffuren dargestellt, wobei im Kembereich die Porenstruktur angedeutet wurde. Wird das Tragelement 1 in einem Spritzgussvorgang hergestellt, bildet die Tragplatte 2 sowie die daran angeformten Stützelemente 4 einen einstückigen Bauteil aus. Dieser kann nach Abkühlung des Kunststoffmaterials aus der nachfolgend noch näher beschriebenen Form bzw. deren Formhohlraum entnommen werden. Dabei sind zumeist keinerlei Nacharbeiten zur Festlegung der endgültigen Raumform mehr notwendig. So wird bevorzugt das gesamte Tragelement 1 über seinen gesamten Querschnitt gesehen aus dem gleichen Kunststoffmaterial gebildet. Es wäre aber auch denkbar, dass der Kembereich 6 und die Schicht 7 aus zueinander unterschiedlichen Kunststoffmaterialien gebildet werden.

Die hier dichter dargestellte äußere Schicht 7 weist in Abhängigkeit vom Herstellungsverfahren sowie dem gewählten Kunststoffmaterial eine durchgehend feste, in ihrem Inneren nahezu porenfrei ausgebildete Umgrenzung des Kernbereichs 6 aus, wobei die Oberfläche 5 bevorzugt ebenflächig, glatt und ohne jeglicher Lunkerbildung ausgebildet ist. Je glatter und ebener die Oberfläche 5 ist, desto geringer ist der Verschmutzungsgrad und der damit einhergehende, nachträgliche Reinigungsaufwand zur Säuberung der Oberfläche 5 des Tragelements 1. Der Kernbereich 6 bildet bei dem hier gezeigten Ausführungsbeispiel einen Teil eines Sandwichbauteiles, welcher die voneinander distanziert angeordneten Schichten 7 auf Distanz hält.

Weiters ist der Kembereich 6 durch einen aus dem Kunststoffmaterial gebildeten, porigen Kunststoffschaum gebildet. Dadurch wird bei hohem Volumenanteil des Kernbereichs 6 ein geringes Eigengewicht und damit verbunden eine geringe Dichte bzw. ein geringes Raumgewicht bezüglich der Randschicht erzielt.

So kann beispielsweise der Kembereich 6 ein Raumgewicht bzw. eine Dichte aufweisen, welche bezüglich der Dichte der Schicht 7 in einer unteren Grenze von 25%, insbesondere 30%, bevorzugt 40% und einer oberen Grenze von 80 % liegt. Die äußere, den Kembereich 6 umgebende Schicht 7 weist eine Dichte bzw. ein Raumgewicht mit einer unteren Grenze von 850 kg/m³, bevorzugt 910 kg/m³ und einer oberen Grenze von 1200 kg/m³, bevorzugt von 960 kg/m³ auf. Eine Dicke 8 der äußeren Schicht 7 ist abhängig von der gewählten Tragfähigkeit des Tragelements 1 bzw. der Lage des Referenzquerschnittes im Tragelement 1. Dabei kann die Dicke 8 der Schicht 7 eine untere Grenze 0,1 mm, bevorzugt von 0,3 mm und eine obere Grenze von 1,5 mm, bevorzugt von 1,0 mm aufweisen. Auch wäre die Dicke von 0,2 mm oder aber auch von 0,8 mm möglich.

Dadurch, dass die äußere Schicht 7 eine höhere Dichte bzw. ein höheres Raumgewicht bezüglich des Kembereiches 6 aufweist, weist auch die Schicht 7 an ihrer Oberfläche 5 eine gegenüber dem Kembereich 6 höhere Härte auf. Dadurch ist gewährleistet, dass auch bei höheren Belastungen eine zu starke Beschädigung des Tragelements 1, insbesondere der äußeren Schicht 7, durch Abrieb verhindert bzw. hintan gehalten wird.

Wie am besten aus der Fig. 1 zu ersehen ist, sind die einzelnen Stützelemente 4 jeweils in Eckbereichen 9 der Tragplatte 2 angeordnet. Im Verhältnis der Seitenlängen von Stirnflächen 10, 11 zueinander können hier noch zusätzliche Stützelemente 4 vorgesehen sein. Bei dem hier gezeigten Ausführungsbeispiel weist die Stirnfläche 10 gegenüber der weiteren Stirnfläche 11 eine größere Längserstreckung auf, wobei hier die Stützelemente 4 in einer halben Längserstreckung der Stirnfläche 10 der Tragplatte 2 angeordnet sind. Weist die weitere Stirnfläche 11 ebenfalls eine größere Längserstreckung auf, können auch hier zusätzliche Stützelemente 4 angeordnet sein, wie dies in einer der nachfolgenden Figuren gezeigt und beschrieben ist.

Die Stützelemente 4 distanzieren die Tragplatte 2 von einer hier nicht näher dargestellten Aufstandsfläche, wobei der zwischen den Stützelementen 4 ausgebildete Freiraum zum Einführen von Hebemitteln, wie beispielsweise die Gabel eines Hubstaplers, dienen. Um das Einführen dieser Hebemittel zu erleichtern, ist es vorteilhaft, wenn die Stützelemente 4 an ihren den Stirnflächen 10, 11 der Tragplatte 2 zugewendeten Eck- bzw. Randbereichen 12 mit einer Abrundung 13 versehen sind.

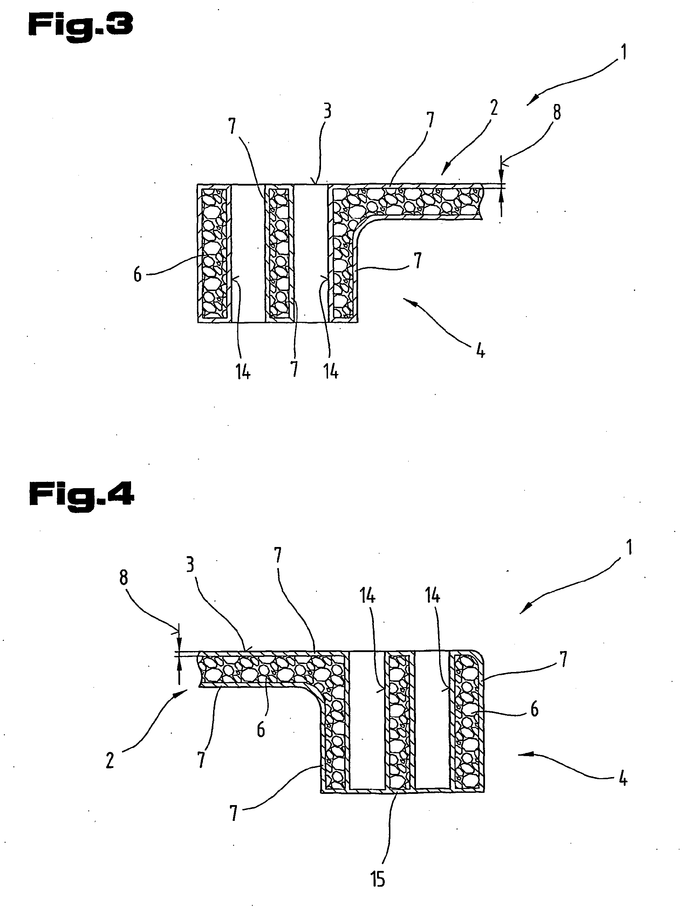

Weiters ist noch vereinfacht in diesen Figuren dargestellt, dass im Stützelement 4 zumindest eine, bevorzugt jedoch mehrere, Ausnehmungen 14 angeordnet sind, welche in senkrechter Richtung bezüglich der Aufnahmefläche 3 ausgerichtet sind. Die Längserstreckung der Ausnehmungen 14 ist vom Einsatzzweck des Tragelements 1 abhängig und erstreckt sich zumindest über einen Teilbereich einer Höhe "H" des Stützelements 4, wie dies in strichlierten Linien in der Fig. 3 bei der rechten Ausnehmung 14 dargestellt ist.

Erstreckt sich die Ausnehmung 14 ausgehend von der von der Aufnahmefläche 3 abgewandten Seite des Stützelements 4 in dieses hinein, wird im Bereich der Aufnahmefläche 3 eine durchgehende Tragplatte 2 erzielt. Es wäre aber auch möglich, dass sich die Ausnehmung 14 zumindest bereichsweise in die Tragplatte 2 hinein erstreckt, wie dies in strichlierten Linien in der Fig. 3 im Bereich der linken Ausnehmung 14 dargestellt ist. Zumeist ist jedoch die Ausnehmung 14 derart ausgebildet, dass diese die Tragplatte 2 und/oder das Stützelement 4 vollständig durchsetzt.

Um ein Versinken der Stützelemente 4 in einem weicheren Boden zu verhindern, ist es vorteilhaft, wenn das oder die Stützelemente 4 auf der von der Tragplatte 2 abgewendeten Seite einen durchgehend geschlossenen Wandteil 15 aufweisen und sich die Ausnehmungen 14 dabei, ausgehend von der Aufnahmefläche 3, bis hin zum Wandteil 15 erstrecken. Dies hat zwar den Nachteil, dass in diesen Ausnehmungen 14 sich Verschmutzungen oder Flüssigkeiten, wie Regenwasser, ansammeln können, jedoch eine höhere Standfestigkeit gegen ein Einsinken des Tragelements 1 in nicht so tragfähigem Untergrund erzielt wird.

Wie weiters in den Fig. 3 und 4 vereinfacht dargestellt, weist ein zwischen den Ausnehmungen 14 ausgebildeter Steg in seinem Querschnitt in paralleler Ausrichtung zur Aufnahmefläche 3 den Kernbereich 6 auf, welcher in seinem Querschnitt bezüglich des gesamten Querschnittes des Steges eine obere Grenze von 95 % und eine untere Grenze von 50 % aufweist.

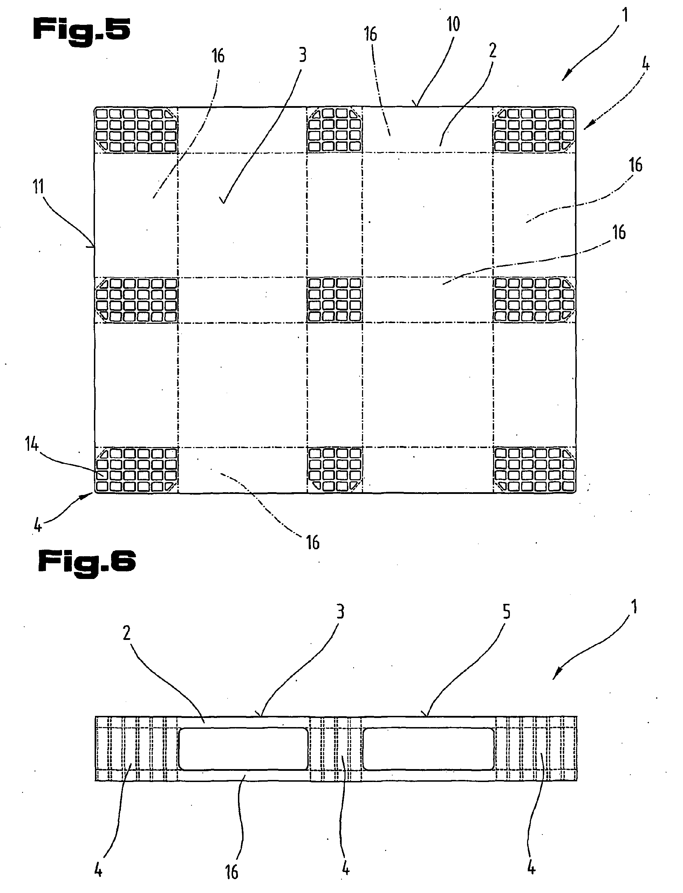

Eine weitere mögliche und gegebenenfalls für sich eigenständige Ausbildung des Tragelements 1 ist in den Fig. 5 und 6 dargestellt, wobei wiederum für gleiche Teile gleiche Bezugszeichen bzw. Bauteilbezeichnungen, wie in den vorangegangen Fig. 1 bis 4 verwendet werden. Gleichfalls wird, um unnötige Wiederholungen zu vermeiden, auf die detaillierte Beschreibung in den vorangegangen Fig. 1 bis 4 hingewiesen bzw. Bezug genommen.

Im Gegensatz zu dem zuvor gezeigten Ausführungsbeispiel umfasst hier das Tragelement 1 an der von der ersten Tragplatte 2 abgewendeten Seite der Stützelemente 4 eine weitere Tragplatte 16. Je nach Größe und Abmessung des bzw. der Stützelemente 4 können wiederum in deren Bereich die zuvor beschriebenen Ausnehmungen 14 angeordnet sein, wobei diese in zumindest einer der Tragplatten 2, 16 angeordnet sein können. Dabei können die Ausnehmungen 14 nicht nur in den Tragplatten 2, 16 angeordnet sein, sondern sie können sich auch zumindest bereichsweise in das Stützelement 4 hinein erstrecken bzw. bevorzugt sich jedoch durchgehend zwischen den beiden voneinander distanzierten Tragplatten 2, 16 erstrecken. Damit durchsetzen die Ausnehmungen 14 das gesamte Tragelement 1. Dies hat den Vorteil, dass eingetretene Verunreinigungen oder Flüssigkeiten in diesem Bereich durch die einzelnen Ausnehmungen 14 hindurchtreten können.

Weiters ist hier vereinfacht dargestellt, dass im Bereich des Stützelements 4 mehrere, nebeneinander angeordnete Ausnehmungen 14 vorgesehen sind, wobei diese einen etwa quadratischen Querschnitt aufweisen.

Eine zusätzliche Ausführungsvariante zur Ausbildung der hier unten angeordneten Tragplatte 16 ist in der Fig. 5 in strichpunktierten Linien angedeutet. Dabei wäre es möglich, die Tragplatte 16 in Form von Kufen bzw. streifenartig auszubilden und nur im Bereich der Stützelemente 4 vorzusehen. So könnten sich die Teilabschnitte der Tragplatte 16 in Richtung der längeren Stirnfläche 10 und/oder in Richtung der kürzeren Stirnfläche 11 erstrecken. Bei gleichzeitiger Anordnung mehrerer Teilabschnitte sind diese einander kreuzend ausgerichtet und umgrenzen dazwischen angeordnete Durchbrechungen. Dadurch kann das Tragelement nur einseitig zum Beladen verwendet werden, da im Bereich der weiteren Tragplatte 16 zu große Zwischenräume zwischen den einzelnen Tragplattenabschnitten entstehen. Diese mögliche Ausführungsvariante wäre auch bei dem nachfolgend beschriebenen Tragelement 1 möglich.

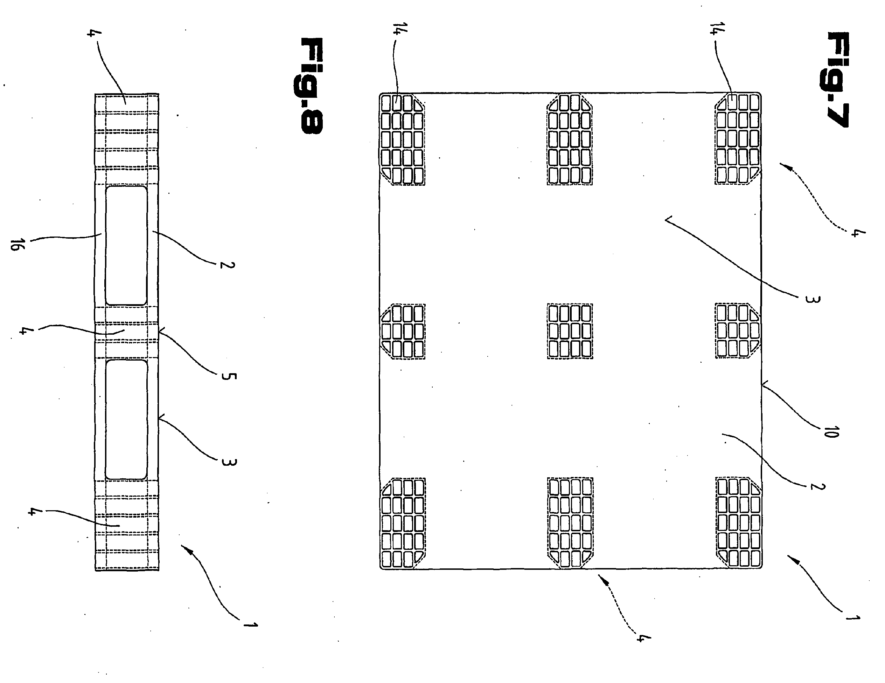

In den Fig. 7 und 8 ist eine weitere mögliche und gegebenenfalls für sich eigenständige Ausbildung des Tragelements 1 gezeigt, wobei wiederum für gleiche Teile gleiche Bezugszeichen bzw. Bauteilbezeichnungen, wie in den vorangegangenen Fig. 1 bis 6, verwendet werden. Um unnötige Wiederholungen zu vermeiden, wird auf die detaillierte Beschreibung in den vorangegangenen Fig. 1 bis 6 hingewiesen bzw. Bezug genommen.

Dieses hier gezeigte Ausführungsbeispiel ist ähnlich jener Ausführungsform, wie dies bereits in den Fig. 5 und 6 beschrieben worden ist. Auch dieses Tragelement 1 umfasst die beiden Tragplatten 2, 16 und die diese Tragplatten 2, 16 distanzierenden Stützelemente 4. Auch hier sind wiederum die Stützelemente 4 nicht nur in den Eckbereichen der Tragplatten 2, 16 sondern auch jeweils in der halben Distanz der Längserstreckung der Stirnflächen 10, 11 vorgesehen. Auch diese Stützelemente 4 sind wiederum von mehreren Ausnehmungen durchsetzt, welche sowohl die Tragplatten 2, 16 als auch die Stützelemente 4 zumindest bereichsweise, jedoch bevorzugt durchgehend, durchsetzen.

Im Gegensatz zu dem in den Fig. 5 und 6 gezeigten Ausführungsbeispiel weisen hier die einzelnen Ausnehmungen 14 einen in etwa rechteckigen Querschnitt auf, wobei die längere Seite auch der hier länger ausgebildeten Stirnfläche 10 zugewandt bzw. parallel zu dieser ausgerichtet ist.

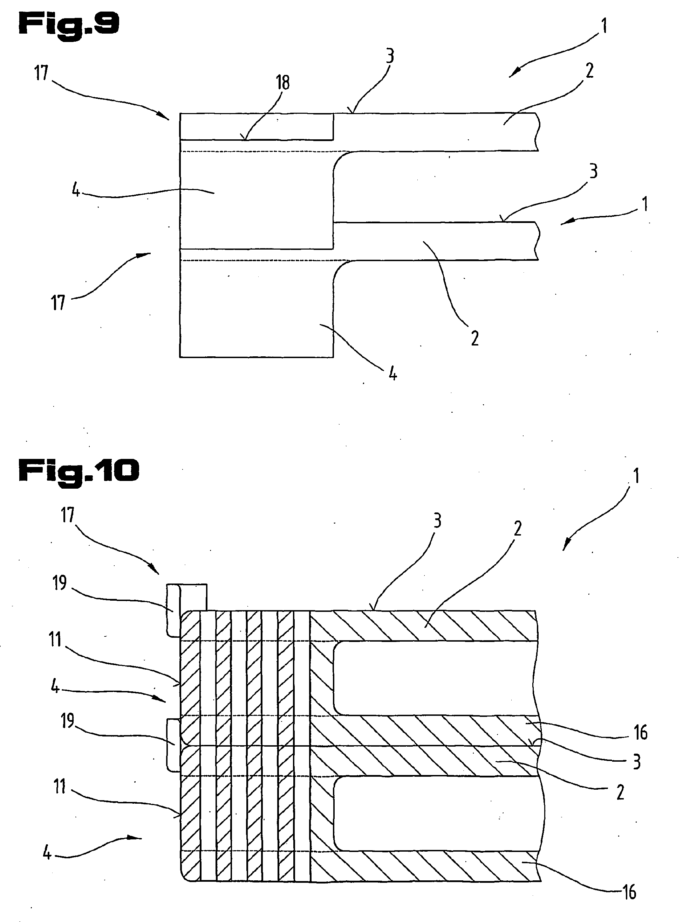

In der Fig. 9 ist eine weitere mögliche und gegebenenfalls eigenständige Ausbildung des Tragelements 1 gezeigt, wobei wiederum für gleiche Teile gleiche Bezugszeichen bzw. Bauteilbezeichnungen, wie in den vorangegangenen Fig. 1 bis 8, verwendet werden. Um unnötige Wiederholungen zu vermeiden, wird auf die detaillierte Beschreibung in den vorangegangenen Fig. 1 bis 8 hingewiesen bzw. Bezug genommen.

Die hier gezeigten Tragelemente 1 sind gemäß der Ausführungsform, wie dies in den Fig. 1 bis 4 beschrieben worden ist, ausgebildet. Zusätzlich ist hier gezeigt, dass in einem Umfangsbereich der Tragplatte 2 zumindest bereichsweise Stapelmittel 17 vorgesehen sind, wodurch es möglich ist übereinander angeordnete Tragelemente 1 zueinander während der Stapelung gegeneinander auszurichten.

Dabei können die Stapelmittel 17 beispielsweise durch eine, bevorzugt jedoch mehrere, in der Aufnahmefläche 3 angeordnete bzw. vorgesehene Zentrierausnehmungen 18 ausgebildet sein. Das entsprechende Gegenstück der Stapelmittel 17 kann dabei durch das oder die Stützelemente 4 gebildet sein.

In der Fig. 10 ist eine weitere mögliche und gegebenenfalls für sich eigenständige Ausbildung der Tragelemente gezeigt, wobei wiederum für gleiche Teile gleiche Bezugszeichen bzw. Bauteilbezeichnungen, wie in den vorangegangenen Fig. 1 bis 9, verwendet werden. Gleichfalls wird, um unnötige Wiederholungen zu vermeiden, wird auf die detaillierte Beschreibung in den vorangegangenen Fig. 1 bis 9 hingewiesen bzw. Bezug genommen. Die hier gezeigten Tragelemente 1 können den Ausführungsformen entsprechen, wie diese bereits zuvor in den Fig. 5 und 6 bzw. 7 und 8 beschrieben worden sind.

Dabei weisen die einzelnen Tragelemente 1 die beiden voneinander durch die Stützelemente 4 voneinander distanzierten Tragplatten 2, 16 auf. Zur gegenseitigen Lagefixierung während des Übereinanderstapelns können die Lagemittel 17 hier in einem Umfangsbereich der Tragplatte 2 durch im Bereich der Stirnfläche 11 angeordnete und die Aufnahmefläche 3 auf die vom Stützelement 4 abgewendete Seite überragende Leisten 19 ausgebildet sein. Dabei können die Leisten 19 jeweils in den Eckbereichen der Tragplatte 2 vorgesehen sein. Durch die in den Eckbereichen vorgesehene Anordnung der Stapelmittel 17, insbesondere der Leisten 19, wird eine gegenseitige Verdrehsicherung sowie Rutschsicherung der übereinander gestapelten Tragelemente 1 erzielt.

Unabhängig davon wäre es aber auch möglich die Stapelmittel 17, insbesondere die Leisten 19, verteilt über die jeweiligen Längserstreckungen der Stirnflächen 10, 11 vorzusehen und so ebenfalls eine gegenseitige Lageausrichtung bzw. Fixierung der übereinander gestapelten Tragelemente 1 zu erzielen.

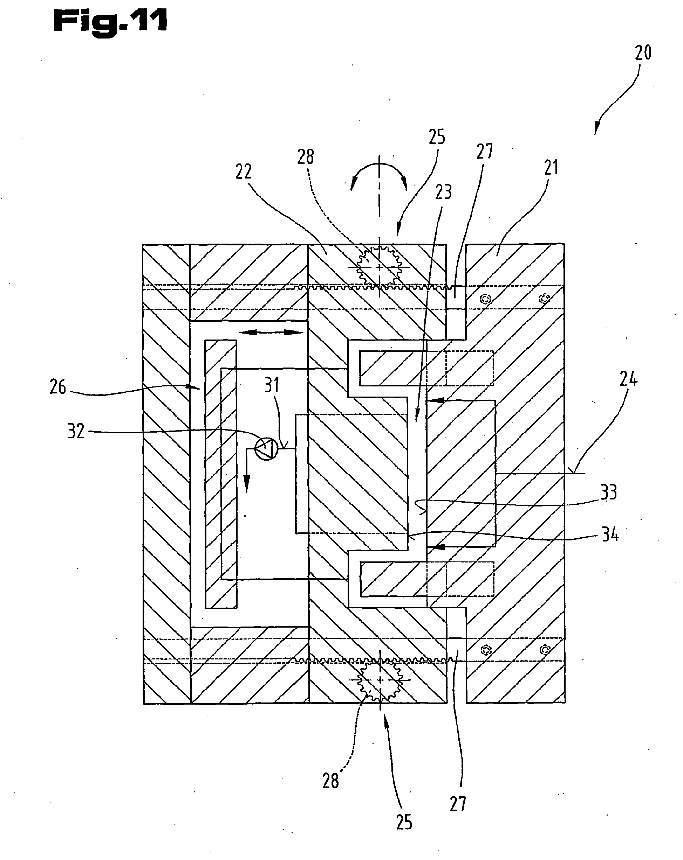

In der Fig. 11 1 ist eine mögliche und gegebenenfalls für sich eigenständige Ausbildung eines Spritzgusswerkzeuges 20 zur Herstellung eines Tragelements 1 gezeigt, wobei diese Darstellung nur sehr schematisch vereinfacht gewählt wurde. Das hier herzustellende Tragelement 1 entspricht jener Ausführungsform, wie dieses in den Fig. 1 bis 4 gezeigt wurde und dabei das Tragelement 1 die Tragplatte 2 sowie mehrere daran angeordnete Stützelemente 4 umfasst.

Das Spritzgusswerkzeug 20 umfasst hierbei zwei vereinfacht dargestellte Formhälften 21, 22, welche in ihrer geschlossenen Stellung einen Formhohlraum 23 mit Formwänden 33, 34 umgrenzen bzw. umschließen.

In diesem hier gezeigten Ausführungsbeispiel ist die erste Formhälfte 21 die jenige, welche in der Darstellung rechts gezeigt wurde und gegenüber der weiteren Formhälfte 22 relativ gegenüber dieser verstellbar ausgebildet ist. Das Einbringen des erweichten Kunststoffmaterials zur Bildung des Tragelements 1 erfolgt durch einen vereinfacht angedeuteten Einspritzkanal 24, welche im vorliegenden Ausführungsbeispiel in der ersten Formhälfte 21 angeordnet ist. Zur gegenseitigen relativen Verlagerung der beiden Formhälften 21, 22, sind zwischen diesen beiden Formhälften 21, 22 mehrere Verstellmittel 25 vorgesehen, wobei diese Verstellmittel 25 gleichzeitig die relative Verlagerung der ersten Formhälfte 21 gegenüber der weiteren Formhälfte 22 sicherstellen bzw. bewirken. Diese Verstellmittel 25 dienen dazu, dass der Formhohlraum 23 stufenlos in seinem Volumen verstellbar ausgebildet ist. Dadurch ist es möglich während dem Herstellvorgang des Tragelements 1 den Formhohlraum 23 in seinem Volumen zu verändern und so die relative Lage der beiden Formhälften 21, 22 zueinander zu verändern.

Das Herstellungsverfahren des Tragelements 1 kann beispielsweise derart erfolgen, dass die beiden Formhälften 21, 22 und damit verbunden der Formhohlraum 23 auf einen Minimalabstand zueinander und damit verbunden auf ein Minimalvolumen verstellt werden. Diese Stellung kann auch als Ausgangsstellung bezeichnet werden und bildet ein minimales Ausgangsvolumen aus. In dieser relativen Lage zueinander wird das Kunststoffmaterial durch den Einspritzkanal 24 dem Formhohlraum 23 zugeleitet und dieser vom Kunststoffmaterial bevorzugt vollständig ausgefüllt.

Anschließend daran wird das in den Formhohlraum 23 eingebrachte Kunststoffmaterial in seinen dem Formhohlraum 23 zugewandten Randbereichen abgekühlt, sodass sich die zuvor beschriebene Schicht 7 im Bereich der äußeren Oberfläche 5 des Tragelements 1 ausbildet. Dadurch wird die relativ dichte und tragfähige Schicht 7 ausgebildet. Anschließend daran wird mittels der Verstellmittel 25 die erste Formhälfte 21 relativ gegenüber der feststehenden weiteren Formhälfte 22 verlagert, wodurch eine Vergrößerung des Formhohlraums 23 stattfindet. Bedingt durch diese Vergrößerung des Formhohlraums 23, kann das im Kernbereich 6 angeordnete Kunststoffmaterial, welches noch nicht ausgehärtet ist, einem Aufschäumprozess unterworfen werden, welcher durch zugesetzte bzw. noch einbringbare Treibmittel bewirkbar ist. Dadurch wird ein Kernbereich 6 geschaffen, welcher eine porige Schaumstruktur aufweist und dadurch das Tragelement 1 in Form eines Sandwichelementes ausbildet. Dabei werden die festeren Schichten 7 durch den porigen weicheren und eine geringe Dichte bzw. ein geringeres Raumgewicht aufweisenden Kembereich 6 voneinander auf Distanz gehalten.

In dieser vergrößerten Volumenstellung des Formhohlraums 23 kann dann die endgültige Abkühlung und die damit verbundene Verfestigung des Tragelements 1 erfolgen und dies so lange, bis dass es formstabil ist und mittels eines vereinfacht dargestellten Auswerfers 26 nach Öffnen der beiden Formhälften 21, 22 aus dem Formhohlraum 23 ausgestoßen bzw. ausgegeben werden kann.

Im Anschluss an die Vergrößerung des Formhohlraums 23 wäre es aber auch noch unabhängig davon möglich, diesen wiederum in seinem Volumen zu verkleinern und dadurch eine Kompression des Kunststoffmaterials innerhalb des Formhohlraums 23 zu bewirken, bevor das Kunststoffmaterial gänzlich erstarrt ist. Dabei kann von einem vergrößerten Zwischenvolumen (Zwischenstellung) des Formhohlraums 23 gesprochen werden, welches nach einer gewissen Haltezeit auf ein Endvolumen (Endstellung) verkleinert wird, wobei dieses Endvolumen zwischen dem Anfangsvolumen und dem Zwischenvolumen des Formhohlraums 23 während des Herstellvorganges liegt. Das Endvolumen ist somit größer gewählt als das minimale Ausgangsvolumen.

Unabhängig davon wäre es aber auch noch möglich, dass bei Erreichen eines Füllvolumen des Formhohlraums 23 bezüglich seines minimalen Ausgangsvolumens (Ausgangsstellung) in einer unteren Grenze von 55%, bevorzugt 70%, und einer oberen Grenze von 98%, bevorzugt 90%, bereits der Verstellvorgang des Formhohlraums 23 ausgehend von seinem minimalen Ausgangsvolumen hin zu seinem maximalen Zwischenvolumen und/oder Endvolumen begonnen wird. Nachfolgend wird während der Vergrößerung des Volumens des Formhohlraums 23 der Einspritzvorgang so lange fortgesetzt, bis das vorgegebene Einspritzvolumen erreicht wird. Die Fortsetzung des Einspritzvorganges bezüglich eines gesamten Öffnungsweges zwischen dem minimalen Ausgangsvolumen und dem maximalen Zwischenvolumen und/oder Endvolumen wird innerhalb einer unteren Grenze von 5%, bevorzugt von 10%, und einer oberen Grenze von 35%, bevorzugt von 30%, durchgeführt.

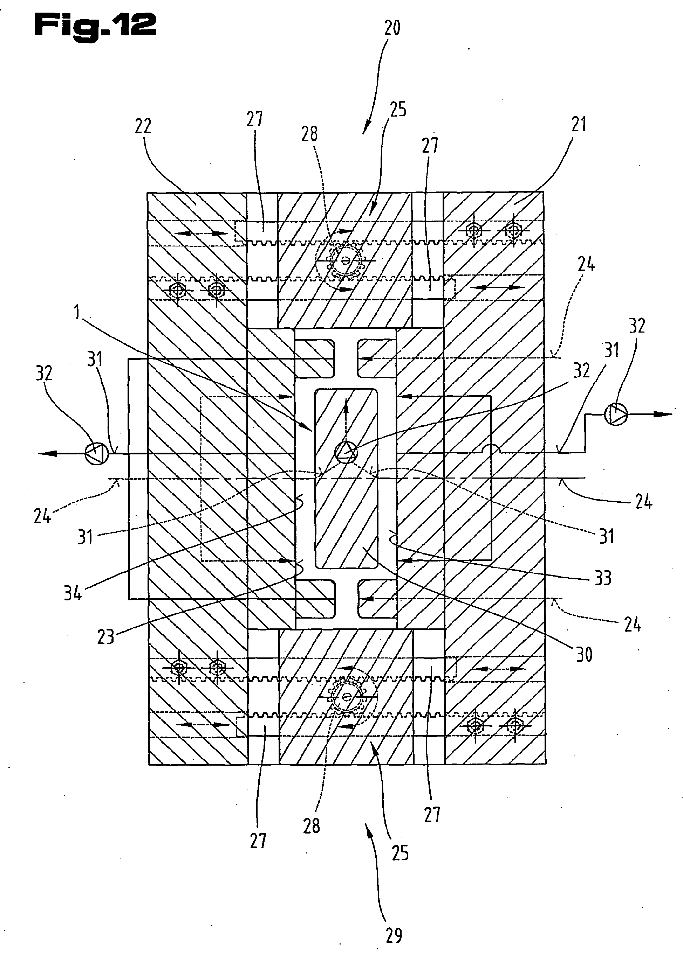

Als weitere Variante wäre es dabei noch möglich, die zur Ausbildung der Stützelemente 4 bzw. der Ausnehmungen 14 vorgesehene Formteile des Spritzgusswerkzeuges 20 in Bezug zur feststehenden Formhälfte 22 ebenfalls feststehend auszubilden und dabei die zuvor beschriebenen Bewegungen der Formhälfte 21 zur Verstellung des Formhohlraumes 23 nicht mit zu machen bzw. durchzuführen. So könnten diese Formteile verschiebbar in der verstellbaren Formhälfte 21 gelagert sein. Diese Variante wäre aber auch bei dem Spritzgusswerkzeug gemäß der Fig. 12 möglich, wobei dann diese Formteile bezüglich des Formmittelteiles 29 feststehend ausgebildet sind.

Der Einfachheit halber wurde hier auf die Darstellung verschiedenster Kühlkanäle innerhalb der Formhälften 21, 22 verzichtet. Weiters ist es möglich den beiden Formhälften 21, 22 zusätzliche Führungsanordnungen zuzuordnen, um so eine exakte gegenseitige Verlagerung der beiden Formhälften 21, 22 gegeneinander zu erzielen. Dies können beispielsweise hier nicht näher dargestellte Stangenführungen sein, welche durch zusätzliche angeordnete Lager einen exakten Verstellweg definieren, wobei auch die gegenseitige Verstellung einfach durch die zuvor beschriebenen Verstellmittel 25 erfolgt.

Die hier vereinfacht dargestellten Verstellmittel 25 können beispielsweise durch einen Zahnstangenantrieb gebildet sein, wobei bei dem hier vorliegenden Ausführungsbeispiel eine Zahnstange 27 mit der bewegbaren Formhälfte 21 feststehend damit verbunden ist. Dieser Zahnstange 27 ist als Antriebsmittel ein Zahnrad 28 zugeordnet, welches seinerseits im Bereich der weiteren Formhälfte 22 vereinfacht dargestellt ist. Durch die Mehrfachanordnung der Vertellmittel 25 erfolgt eine synchrone Verstellung der beiden Formhälften 21, 22 gegeneinander. Anstelle des Zahnstangenantriebes wäre es aber auch möglich entsprechende Kugelspindeln, Schrittmotore oder Ähnliches einzusetzen.

Weiters ist bei dieser Ausführungsform noch dargestellt, dass in den Formhohlraum 23 zumindest eine oder aber auch mehrere Leitungen 31 einmünden, welche mit einem Unterdruckerzeuger 32 in Leitungsverbindung stehen. Dadurch ist es möglich, dass der Formhohlraum 23 zumindest während dem Einspritzvorgang des Kunststoffmaterials zur Bildung des Tragelements 1 auf einen bezüglich des Umgebungsdrucks geringeren Druck abgesenkt wird. Unabhängig davon wäre es aber auch noch möglich, den Formhohlraum 23 bereits vor dem Einspritzvorgang auf einen bezüglich des Umgebungsdrucks geringeren Druck abzusenken. Damit wird erreicht, dass das eingebrachte erweichte bzw. aufbereitete Kunststoffmaterial an die Formwände 33, 34 angesaugt und damit an diese angelegt wird. Dieses Anlegen kann während der Verstellvorgänge des Formhohlraums 23 über den größten Flächenanteil an den Formwänden 33, 34 des Formhohlraums 23 erfolgen. Dabei wird mit Vorteil eine glatte und in ihrer Güte gegenüber herkömmlichen Herstellungsverfahren verbesserte Oberfläche erzielt. Dies deshalb, da der erweichte Kunststoff stets an den Formflächen 33, 34 angesaugt wird und deshalb auch während der gesamten Verstellvorgänge, insbesondere aber bei der Vergrößerung des Formhohlraums 23, eine satte Anlage erreicht wird.

Nachfolgend sei beispielhaft eine von vielen Möglichkeit für Verschiebewege zwischen den Formhälften 21, 22 angeführt. Diese Maßangaben beziehen sich auf die Stärke des Formhohlraums 23 zur Ausbildung der Tragplatte 2 bzw. 16 und sind in paralleler Richtung zur Verstellbewegung angegeben. In der Ausgangsstellung mit dem minimalen Ausgangsvolumen sind die einander gegenüberliegenden Formwände 33, 34 beispielsweise in einer Distanz von 4 mm angeordnet. Ausgehend von dieser Stellung der beiden Formhälften 21, 22 wird der Formhohlraum 23 hin in die Zwischenstellung zur Erreichung seines maximalen Zwischenvolumens verstellt. Dabei beträgt beispielsweise dieser Verstellweg in der gleichen Richtung 6 mm, wodurch die beiden einander gegenüberliegenden Formwände 33, 34 in einer Distanz von 10 mm voneinander angeordnet sind. Die nachfolgende Verkleinerung des Formhohlraums, ausgehend von der Zwischenstellung mit dem maximalen Zwischenvolumen hin zum dazu geringeren Endvolumen, erfolgt mit einem Verstellweg von beispielsweise 2 mm. Damit sind die beiden Formwände 33, 34 endgültig in einer Distanz von 8 mm voneinander distanziert und legen so die Dicke bzw. Stärke der Tragplatte 2 bzw. 16 fest. Die Dauer des Verstellvorganges von der Ausgangsstellung hin zur Zwischenstellung kann beispielsweise 10 s und die Rückverstellung von der Zwischenstellung hin zur Endstellung kann beispielsweise 8 s betragen.

Unabhängig davon wären aber auch größere Verstellwege, zwischen der Ausgangsstellung und der Zwischenstellung, möglich, wobei hier auch Wege in den Grenzen von 10 und 50 mm, bevorzugt 35 mm bis 40 mm, gewählt werden können. Der Verstellweg von der Zwischenstellung hin zur Endstellung kann dabei hingegen gleich wie zuvor beschrieben, beibehalten werden. Dieser Verstellweg, ausgehend von der Zwischenstellung hin zur Endstellung beeinflusst die Dicke 8 der äußeren Schicht 7, welche den Kembereich 6 umgibt. Je größer der Weg der Rückverstellung, desto stärker bzw. dicker wird damit die Schicht 7.

Wie bereits ebenfalls zuvor beschrieben, wird bereits während des Erreichens eines gewissen Füllvolumens bezüglich des Ausgangsvolumens mit der Verstellung von der Ausgangsstellung hin zur Zwischenstellung begonnen. Der weitere Einspritzvorgang zum Einbringen des auf die maximale Einspritzmenge noch fehlenden Volumens wird beispielsweise innerhalb eines Öffnungsweges, beginnend von der Ausgangsstellung hin zur Zwischenstellung, von 1,5 mm durchgeführt. Ist die gesamte vorgesehene Einspritzmenge bzw. das Einspritzvolumen in den Formhohlraum 23 eingebracht, erfolgt die Vergrößerung des Volumens des Formhohlraums auf das maximale Zwischenvolumen in die Zwischenstellung.

Weiters wurden Festigkeit- sowie Verformungs- und Falltest an Tragelementen 1 durchgeführt, wobei hier die Tragelemente eine äußere Abmessung von 600 mm x 400 mm aufgewiesen haben. Die Tragplatte 2 wies dabei unterschiedliche Dicken bzw. Stärken auf. So wurden beispielsweise Tragelemente 1 mit unterschiedlichen Stärken der Tragplatten 2 von 8 mm, 10 mm und 12 mm hergestellt und getestet. Bei einem einmaligen Falltest auf eine Ecke der Tragplatte 2 des Tragelements 1 aus einer Fallhöhe von 0,5 m konnte nur bei dem Tragelement mit der Dicke der Tragplatte von 12 mm eine Veränderung um 3 mm festgestellt werden. Bei einem gleichen Falltest, jedoch aus einer Fallhöhe von 4 m, wurden bereits beim ersten Durchgang die Ecken gebrochen. Bei Beladungstest mit 5 kN sowie 7,5 kN konnten vereinzelt maximale Verformungen von 3 mm festgestellt werden.

In der Fig. 12 ist eine weitere und gegebenenfalls für sich eigenständige Ausbildung eines Spritzgusswerkzeuges gezeigt, wobei wiederum für gleiche Teile gleiche Bezugszeichen bzw. Bauteilbezeichnungen, wie in den vorangegangenen Fig. 1 bis 11, verwendet werden. Gleichfalls wird, um unnötige Wiederholungen zu vermeiden, auf die detaillierte Beschreibung in den vorangegangenen Fig. 1 bis 11 hingewiesen bzw. Bezug genommen.

Das hier gezeigte Spritzgusswerkzeug 20 unterscheidet von dem in der Fig. 11 gezeigten und beschriebenen Spritzgusswerkzeug 20 dadurch, dass zusätzlich zwischen den beiden Formhälften 20, 21 ein dazwischen angeordneter Formmittelteil 29 vorgesehen ist. Dabei umgrenzen die beiden Formhälften 20, 21 sowie der dazwischen angeordnete Formmittelteil 29 in der geschlossenen Stellung den Formhohlraum 23. Zusätzlich sind die beiden Formhälften 20, 21 relativ gegenüber dem Formmittelteil 29 verstellbar ausgebildet. Auch bei diesem Ausführungsbeispiel sind wiederum zwischen den beiden Formhälften 21, 22 mehrere Verstellmittel 25 vorgesehen. Diese Verstellmittel 25 bewirken gleichzeitig die relative Verlagerung der beiden Formhälften 21, 22 gegenüber dem Formmittelteil 29.

Dabei kann der Formmittelteil 29 als ortsfest relativ gegenüber den beiden dazu verlagerbaren Formhälften 21, 22 angesehen werden. Der Antrieb der Verstellmittel 25 kann beispielsweise durch das Zusammenwirken von Zahnstangen 27 mit einem gemeinsam diesen zugeordneten Zahnrad 28 erfolgen. Aufgrund der beidseitigen Anordnung der Zahnstangen 27 bezüglich des Zahnrades 28 sowie der gegeneinander versetzten Anordnung der Zahnstangen 27 an den beiden Formhälften 21, 22 wird die synchrone und bevorzugt gegensinnige Verstellung der beiden Formhälften 21, 22 bezüglich dem Formmittelteil 29 sicher gestellt. Das Zahnrad 28 stellt dabei das gemeinsame Antriebsrad eines jeden Verstellmittels 25 dar, wobei auf die detaillierte Beschreibung der Antriebsmittel, beispielsweise eines Motors, Zylinders oder dgl., der besseren Übersichtlichkeit halber verzichtet worden ist.

Das Einbringen des erweichten Kunststoffinaterials zur Bildung des Tragelements 1 kann nur im Bereich einer der beiden Formhälften 21, 22 oder aber auch durch gleichzeitiges Einbringen von beiden Seiten her über beide Formhälften 21, 22 erfolgen, wie des vereinfacht durch die eingezeichneten Einspritzkanäle 24 dargestellt ist.

Weiters ist es vorteilhaft, wenn dem Verstellmittel 25 eine gemeinsame, jedoch hier nicht näher dargestellte, Steuervorrichtung zugeordnet ist, um so eine zentral gemeinsame Steuerung und damit verbundene gleiche Ansteuerung der Verstellmittel 25 zu erzielen.

Weiter ist hier noch vereinfacht dargestellt, dass der Formmittelteil 29 mehrere Kernteile 30 umfasst, welche in senkrechter Richtung bezüglich der Öffnungsrichtung der Formhälften 21, 22 relativ zueinander verstellbar zueinander ausgebildet sind. Diese Kernteile 30 dienen dazu, die Tragplatten 2, 16 zwischen den einzelnen Stützelementen 4 auszubilden. Auch bei diesem hier gezeigten Spritzgusswerkzeug 20 ist es im Zug der Herstellung des Tragelementes 1 wiederum möglich, den Formhohlraum 23 während der Ausbildung des Tragelements 1 in seinem Volumen zu verändern, wie dies bereits zuvor in der Fig. 11 beschrieben worden ist.

Weiters ist in der Fig. 12 noch vereinfacht dargestellt, dass in den Formhohlraum 23 zumindest eine Leitung 31 einmündet, wobei der oder den Leitungen 31 ein oder mehrere Unterdruckerzeuger 32 zugeordnet ist/sind bzw. mit dieser oder diesen in Strömungsverbindung steht/stehen. Dadurch ist es möglich, bereits vor und/oder während des Einspritzvorganges des Kunststoffmaterials in den Formhohlraum 23 dort vorhandene Luft aus dem Formhohlraum 23 abzusaugen, um so das Auffüllen des selben rasch durchführen zu können und so die Hautbildung bzw. Schichtbildung an der Oberfläche 5 des Tragelements 1 zu beschleunigen. Weiters wird dabei noch jener Vorteil erreicht, dass in Verbindung mit dem zuvor beschriebenen Verfahrensablauf, bei welchem die beiden Formhälften 21, 22 nach oder bereits während dem Befüllen des Formhohlraums 23 voneinander wegbewegt und so der Formhohlraum 23 in seinem Volumen vergrößert wird, die Volumenvergrößerung des eingebrachten Kunststoffmaterials durch den damit verbundenen Aufschäumprozess beschleunigt wird. So wird eine erneute rasche Anlage der an der äußeren Oberfläche 5 ausgebildeten Schicht 7 an den Formflächen erzielt. Damit kann aber auch jener Zeitraum kürzer gehalten werden, in welchem keine direkte Anlage der Schicht 7 an den Formwänden 33, 34 erfolgt. Dadurch wird eine rascher Expansion und damit ein Aufschäumen des Kembereiches 6 erzielt und so in weiterer Folge die Kühlwirkung durch die Formhälften 21, 22 begünstigt bzw. verstärkt. Weitere Leitungen 31 für die Absaugung können auch noch im Kernteil 30 bzw. den Kernteilen 30 angeordnet sein, welche ebenfalls in den Formhohlraum einmünden und mit dem Unterduckerzeuger 32 in Strömungsverbindung stehen. Dies ist in strichlierten Linien angedeutet.

Als Werkstoffe können spritzfähige Kunststoffmaterialien aus der Gruppe von Polypropylen (PP), Polyethylen (PE), Polyethylen mit hoher Dichte (PE-HD, HDPE). Gleichfalls können aber auch noch Verstärkungsfasern aus den unterschiedlichsten Materialen beigemischt bzw. zugesetzt werden. So kann es sich dabei um Borfasern, Kohlenstofffasern, Glasfasern, Metallfasern, Synthesefasern handeln.

Ein Vorteil liegt darin, dass durch die unterschiedlichen Dichtewerte ein Tragelement geschaffen wird, welches bei geringerem Eigengewicht trotzdem eine ausreichende Eigenfestigkeit bzw. Eigensteifigkeit bei der Lastaufnahme aufweist. Dadurch wird es möglich, das Transportgewicht des Tragelements, welches sowohl im beladenen als auch unbeladenen Zustand zu transportieren ist, bei Beibehaltung der Höhe der aufzunehmenden Last, zu minimieren. Dies wird durch das Verhältnis der unterschiedlichen Dichtewerte in Form eines dadurch ausgebildeten Sandwichelements erzielt. Der Kembereich mit der geringen Dichte distanziert die eine höhere Dichte und hier auch eine höhere Festigkeit aufweisenden Randschichten voneinander.

Wenn die Schicht 7 eine Dichte bzw. ein Raumgewicht mit einer unteren Grenze von 850 kg/m³, bevorzugt von 910 kg/m³ und einer oberen Grenze von 1.200 kg/m³, bevorzugt von 960 kg/m³ aufweist, kann dadurch das Verhältnis von Eigengewicht zu Tragfähigkeit bzw. Festigkeit des Tragelements auf die unterschiedlichsten Einsatzbedingungen abgestimmt werden. Dadurch wird eine feste und tragfähige Schicht erzielt, welche eine nahezu homogene Umhüllung für den Kembereich darstellt. Weiter kann dadurch auch eine homogene und kompakte Schicht erzielt werden, welche eine glatte und vorwiegend lunkerfreie Oberfläche ausbildet.

Falls die die Schicht 7 eine Stärke bzw. Dicke mit einer unteren Grenze von 0,1 mm, bevorzugt von 0,3 mm und einer oberen Grenze von 1,5 mm, bevorzugt von 1,0 mm aufweist, kann die Tragfähigkeit und damit verbunden das gesamte Aufnahmevermögen des Tragelements 1 festgelegt werden. Darüber hinaus wird aber auch je nach Schichtdicke die auf die Oberfläche der Tragplatte 2 einwirkende und in weiterer Folge aufzunehmende Punktkraft bestimmt.

Falls das Tragelement 1 als einstückiger Bauteil durch die Tragplatte 2, 16 und die Stützelemente 4 gebildet ist, kann damit einfach und kostengünstig in einem Arbeitsgang ein Tragelement 1 geschaffen werden, welches gebrauchsfertig nach dessen Herstellungsvorgang im Zuge eines Spritzgussvorganges aus der Form bzw. dem Spritzgusswerkzeug 20 entnommen werden kann.

Wenn der Kembereich 6 durch einen aus dem Kunststoffmaterial gebildeten porigen Kunststoffschaum gebildet ist, kann aber damit auch das Gesamtgewicht des hergestellten Tragelements 1 reduziert werden und trotzdem ist dabei eine ausreichende Festigkeit erzielbar.

Da das Tragelement 1 über seinen gesamten Querschnitt aus dem gleichen Kunststoffmaterial gebildet ist, kann dieses einfach und kostengünstig hergestellt und es können so zusätzliche Anlagenteile für ansonst notwendige unterschiedliche Kunststoffmaterialien eingespart werden.

Wenn die Stützelemente 4 jeweils in den Eckbereichen 9 der Tragplatte 2, 16 angeordnet sind, kann dadurch eine hohe Standfestigkeit und eine gesicherte Lastabtragung, ausgehend von der Tragplatte 2, 16 hin auf die Stützelemente 4 und weiter auf die Aufstandsfläche des Tragelements 1 erzielt werden.

Sind die Stützelemente 4 in einer halben Längserstreckung der Stirnflächen 10, 11 der Tragplatte 2 angeordnet, kann dadurch die Durchbiegung der Tragplatte 2 zusätzlich verringert und so noch höhere Lasten vom Tragelement 1 aufgenommen werden.

Sind die Stützelemente 4 an ihren den Stirnflächen 10, 11 der Tragplatte 2 zugewendeten Randbereichen 12 mit der Abrundung 13 versehen, kann so das Eindringen von Hebemittel, wie beispielsweise die Gabeln eines Hubstaplers, in die zwischen den Stützelementen 4 ausgebildeten Freiräume wesentlich erleichtert werden.

Wenn im Stützelement 4 zumindest eine Ausnehmung 14 angeordnet ist, welche in senkrechter Richtung bezüglich der Aufnahmefläche 3 ausgerichtet ist und sich zumindest über einen Teilbereich einer Höhe "H" des Stützelements 4 erstreckt oder sich die Ausnehmung 14 zumindest bereichsweise in die Tragplatte 2 hinein erstreckt und/oder diese gegebenenfalls auch vollständig durchsetzt bzw. die Ausnehmung 14 auch das Stützelement 4 vollständig durchsetzt, kann die Materialanhäufung des Kunststoffwerkstoffes zur Ausbildung des Tragelements 1, insbesondere der Stützelemente 4, verringert werden. Zusätzlich kann auch noch die Tragfähigkeit durch die zwischen den Ausnehmungen 14 verbleibenden Stützstege erhöht werden.

Weist das Stützelement 4 auf der von der Tragplatte 2 abgewendeten Seite den durchgehend geschlossenen Wandteil 15 auf, kann dadurch das Einsinken des Tragelementes 1 an einem unbefestigten bzw. weichen Untergrund erschwert bzw. verhindert und so die Standfestigkeit sowie das Einführen der Hebemittel wesentlich erleichtert werden.

Sind in der Aufnahmefläche 3 der ersten Tragplatte 2 Zentrierausnehmungen 18 angeordnet, die mit an einem weiteren Tragelement 1, jedoch auf der davon abgewendeten Seite angeordneten Zentrierelementen zusammenwirken oder sind die Zentrierelemente zumindest bereichsweise durch die Stützelemente 4 gebildet, wird beim Stapeln eine gegenseitige Zentrierung und Halterung der einzelnen übereinander angeordneten Tragelemente 1 gegeneinander erreicht. Dadurch wird die Transportsicherheit wesentlich erhöht, da ein gegeneinander Verrutschen während des Transports und eine damit einhergehende Beschädigung der Tragelemente 1 selbst bzw. daneben befindlicher Güter verhindert werden kann.

Ist an den Stützelementen 4 an der von der ersten Tragplatte 2 abgewendeten Seite eine weitere Tragplatte 16 angeordnet, wird dadurch eine beidseitige Verwendung des Tragelements 1 ermöglicht und zusätzlich die Abstützfläche im Bereich des Bodens wesentlich vergrößert.

Ist in zumindest einer Tragplatte 2, 16 die Ausnehmung 14 angeordnet, welche sich zumindest bereichsweise in das Stützelement 4 hinein erstreckt oder sich die Ausnehmung 14 durchgehend zwischen den beiden voneinander distanzierten Tragplatten 2, 16 erstreckt, wird im Bereich der Stützelemente 4 eine Materialanhäufung verhindert, wodurch einerseits ungewollte Schrumpfungen verhindert und andererseits Gewicht sowie Kosten eingespart werden können.

Sind im Bereich des Stützelements 4 mehrere nebeneinander angeordnete Ausnehmungen 14 angeordnet, ist dadurch eine höhere Eigensteifigkeit der Stützelemente 4 für die Lastabtragung erzielbar. Zusätzlich ist es dabei auch noch möglich, bei exakt übereinander angeordneten Tragelementen 1 in die Ausnehmungen 14 stabförmige Hilfsmittel einzusetzen, um so ein gegenseitiges Verrutschen während des Leertransports der Tragelemente 1 zu verhindern.

Weist ein zwischen den Ausnehmungen 14 ausgebildeter Steg in seinem Querschnitt in paralleler Ausrichtung zur Aufnahmefläche 3 den Kembereich 6 auf, welcher in seinem Querschnitt bezüglich des gesamten Querschnittes des Steges eine obere Grenze von 95 % und eine untere Grenze von 50 % aufweist, wird auch im Bereich der Stützelemente 4 eine Gewichtsreduzierung bei zusätzlicher Erhöhung der Steifigkeit erzielt.

Sind in einem Umfangsbereich der Tragplatte 2, 16 zumindest bereichsweise Stapelmittel 17 vorgesehen, welche ein darüber anordenbares weiteres Tragelement 1 bezüglich dem ersten Tragelement 1 ausrichten oder sind die Stapelmittel 17 durch im Bereich der Stirnflächen 11, 12 der Tragplatte 2, 16 angeordnete Leisten 19 gebildet, wird bei übereinander angeordneten bzw. gestapelten Tragelementen 1 eine gegenseitige Lagefixierung erzielt und so ein ungewolltes Verrutschen gegeneinander verhindert.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Ausführungsbeispiele zeigen mögliche Ausführungsvarianten des Tragelements 1 bzw. des Spritzgusswerkzeuges 20, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Tragelements 1 bzw. des Spritzgusswerkzeuges 20 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2, 3; 4; 5, 6; 7, 8; 9; 10; 11; 12 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Tragelement
- 2: Tragplatte
- 3: Aufnahmefläche
- 4: Stützelement
- 5: Oberfläche

- 6: Kembereich
- 7: Schicht
- 8: Dicke
- 9: Eckbereich
- 10.: Stirnfläche

- 11: Stirnfläche
- 12: Randbereich
- 13: Abrundung
- 14: Ausnehmung
- 15: Wandteil

- 16: Tragplatte
- 17: Stapelmittel
- 18: Zentrierausnehmung
- 19: Leiste
- 20: Spritzgusswerkzeug

- 21: Formhälfte
- 22: Formhälfte
- 23: Formhohlraum
- 24: Einspritzkanal
- 25: Verstellmittel

- 26: Auswerfer
- 27: Zahnstange
- 28: Zahnrad
- 29: Formmittelteil
- 30: Kernteil

- 31: Leitung
- 32: Unterdruckerzeuger
- 33: Formwand
- 34: Formwand

## Patentansprüche

1. Verfahren zur Herstellung eines Tragelements (1), insbesondere einer Transportpalette, aus einem Kunststoffmaterial, bei welchem in einem Spritzgusswerkzeug (20) umfassend zumindest zwei Formhälften (21, 22) in der geschlossenen Stellung derselben ein Formhohlraum (23) mit diesen begrenzenden Formwänden (33, 34) ausgebildet wird und die erste ' Formhälfte (21) relativ gegenüber der weiteren Formhälfte (22) verstellbar ausgebildet wird und dabei ein Volumen des Formhohlraums (23) ausgehend von einem minimalen Ausgangsvolumen in einer Ausgangsstellung auf ein maximales Zwischenvolumen in einer Zwischenstellung und nachfolgend auf ein bezüglich des maximalen Zwischenvolumens dazu geringeres Endvolumen in einer Endstellung verstellt wird und in den Formhohlraum (23) das zur Bildung des Tragelements (1) vorgesehene Kunststoffmaterial eingebracht wird, wobei der Formhohlraum (23) zumindest während dem Einspritzvorgang des Kunststoffmaterials zur Bildung des Tragelements (1) auf einen bezüglich des Umgebungsdrucks geringeren Druck abgesenkt wird, **dadurch gekennzeichnet, dass** bei Erreichen eines Füllvolumen des Formhohlraums (23) bezüglich seines minimalen Ausgangsvolumens in der Ausgangsstellung in einer unteren Grenze von 55%, bevorzugt 70%, und einer oberen Grenze von 98%, bevorzugt 90%, bereits der Verstellvorgang des Formhohlraums (23) ausgehend von seinem minimalen Ausgangsvolumen hin zu seinem maximalen Zwischenvolumen begonnen wird.

2. Verfahren nach Anspruch 1, **dadurch gekennzeichnet, dass** der Formhohlraum (23) bereits vor dem Einspritzvorgang auf einen bezüglich des Umgebungsdrucks geringeren Druck abgesenkt wird.

3. Verfahren nach Anspruch 1 oder 2, **dadurch gekennzeichnet, dass** das Volumen des Formhohlraums (23) stufenlos verstellbar ausgebildet wird.

4. Verfahren nach einem der vorhergehenden Ansprüche, **dadurch gekennzeichnet, dass** das Endvolumen des Formhohlraums (23) größer gewählt wird als das minimale Ausgangsvolumen.

5. Verfahren nach Anspruch 1, **dadurch gekennzeichnet, dass** während der Vergrößerung des Volumens des Formhohlraums (23) der Einspritzvorgang so lange fortgesetzt wird, bis das vorgegebene Einspritzvolumen erreicht wird.

6. Verfahren nach einem der vorhergehenden Ansprüche, **dadurch gekennzeichnet, dass** die Fortsetzung des Einspritzvorganges bezüglich eines gesamten Öffnungsweges zwischen dem minimalen Ausgangsvolumen und dem maximalen Zwischenvolumen innerhalb einer unteren Grenze von 5%, bevorzugt von 10%, und einer oberen Grenze von 35%, bevorzugt von 30%, durchgeführt wird.

7. Verfahren nach einem der vorhergehenden Ansprüche, **dadurch gekennzeichnet, dass** während der Verstellvorgänge des Formhohlraums (23) das in diesen eingebrachte, Kunststoffmaterial zur Bildung des Tragelements (1) über den größten Flächenanteil an den Formwänden (33, 34) des Formhohlraums (23) angesaugt wird.

8. Verfahren nach einem der vorhergehenden Ansprüche, **dadurch gekennzeichnet, dass** der Formhohlraum (23) im Spritzgusswerkzeug (20) durch zwei Formhälften (21, 22) ausgebildet wird und zwischen den beiden Formhälften (21, 22) mehrere mit diesen zusammenwirkende Verstellmittel (25) vorgesehen werden und die Verstellmittel (25) die erste Formhälfte (21) bezüglich der weiteren Formhälfte (22) gleichzeitig gegeneinander verlagern.

9. Verfahren nach einem der Ansprüche 1 bis 7, **dadurch gekennzeichnet, dass** der Formhohlraum (23) im Spritzgusswerkzeug (20) durch zwei Formhälften (21, 22) sowie einen zwischen diesen angeordneten Formmittelteil (29) ausgebildet wird und zwischen beiden Formhälften (21, 22) mehrere mit diesen zusammenwirkende Verstellmittel (25) vorgesehen werden und die Verstellmittel (25) die beiden Formhälften (21, 22) synchron sowie in gegensinniger Bewegungsrichtung bezüglich dem Formmittelteil (29) verlagern.

10. Spritzgusswerkzeug (20) zur Herstellung eines Tragelements (1), insbesondere einer Transportpalette, aus einem Kunststoffmaterial, wobei das Spritzgusswerkzeug (20) zwei Formhälften (20,21) umfasst, welche in der geschlossenen Stellung einen Formhohlraum (23) umgrenzen und die erste Formhälfte (20) relativ gegenüber der weiteren Formhälfte (21) verstellbar ausgebildet ist, wobei zwischen den beiden Formhälften (21, 22) mehrere Verstellmittel (25) vorgesehen sind und diese Verstellmittel (25) gleichzeitig die relative Verlagerung der ersten Formhälfte (21) bezüglich der weiteren Formhälfte (22) bewirken und dass in den Formhohlraum (23) zumindest eine Leitung (31) einmündet, welche mit einem Unterdruckerzeuger (32) in Strömungsverbindung steht, **dadurch gekennzeichnet, dass** die. Verstellmittel (25) durch Zahnstangen-Antriebe gebildet sind.

11. Spritzgusswerkzeug (20) nach Anspruch 10, **dadurch gekennzeichnet, dass** dieses zusätzlich zu den zwei Formhälften (20, 21) einen dazwischen angeordneten Formmittelteil (29) umfasst und diese in der geschlossenen Stellung den Formhohlraum (23) umgrenzen und die beiden Formhälften (20, 21) relativ gegenüber dem Formmittelteil (29) verstellbar ausgebildet sind, wobei zwischen den beiden Formhälften (21, 22) mehrere Verstellmittel (25) vorgesehen sind und diese Verstellmittel (25) die relative Verlagerung der beiden Formhälften (21, 22) bezüglich des Formmittelteils (29) synchron sowie in gegensinniger Bewegungsrichtung bewirken.

12. Spritzgusswerkzeug (20) nach Anspruch 10 oder 11, **dadurch gekennzeichnet, dass** der Formhohlraum (23) mittels der Verstellmittel (25) stufenlos in seinem Volumen verstellbar ausgebildet ist.

13. Spritzgusswerkzeug (20) nach Anspruch 11 oder 12, **dadurch gekennzeichnet, dass** jeder der Formhälften (20, 21) mehrere Zahnstangen (27) zugeordnet sind und jeweils einander gegenüberliegenden Zahnstangen (27) ein gemeinsames Antriebsrad zugeordnet ist.

14. Spritzgusswerkzeug (20) nach einem der Ansprüche 11 bis 13, **dadurch gekennzeichnet, dass** der Formmittelteil (29) mehrere Kernteile (30) umfasst, welche in senkrechter Richtung bezüglich der Öffnungsrichtung der Formhälften (21, 22) relativ zueinander verstellbar ausgebildet sind.

## Claims

1. Method of producing a carrier element (1) from a plastic material, in particular a transport pallet, whereby a mould cavity (23) is formed in an injection mould (20) comprising at least two mould halves (21, 22) when it is in the closed position with mould walls (33, 34) bounding it, and the first mould half (21) is designed so that it can be adjusted relative to the other mould half (22) so that a volume of the mould cavity (23) is adjusted from a minimum initial volume in an initial position to a maximum intermediate volume in an intermediate position and then into a final volume in an end position that is smaller than the maximum intermediate volume, and the plastic material for forming the carrying element (1) is introduced into the mould cavity (23), and the mould cavity (23) is reduced to a pressure below ambient pressure during the process of injecting in the plastic material for forming the carrying element (1), **characterised in that** the process of adjusting the mould cavity (23) from its minimum initial volume to its maximum intermediate volume is initiated once the mould cavity (23) has reached a filled volume to within a lower limit of 55 %, preferably 70 %, and an upper limit of 98 %, preferably 90 %, of its minimum initial volume in the initial position.

2. Method as claimed in claim 1, **characterised in that** the pressure in the mould cavity (23) is already reduced to below ambient pressure prior to the injection process.

3. Method as claimed in claim 1 or 2, **characterised in that** the volume of the mould cavity (23) is designed to be steplessly adjustable.

4. Method as claimed in one of the preceding claims, **characterised in that** the final volume of the mould cavity (23) is selected so that it is bigger than the minimum initial volume.

5. Method as claimed in claim 1, **characterised in that**, as the volume of the mould cavity (23) is being made bigger, the injection process continues until the predefined injection volume is reached.

6. Method as claimed in one of the preceding claims, **characterised in that** the injection process is continued to within a lower limit of 5 %, preferably 10 %, and an upper limit of 35%, preferably 30 %, of a total opening distance between the minimum initial volume and the maximum intermediate volume.

7. Method as claimed in one of the preceding claims, **characterised in that** ,during the operations of adjusting the mould cavity (23), the plastic material introduced into it for forming the carrying element (1) is sucked against the major proportion of the surface of the mould walls (33, 34) of the mould cavity (23).

8. Method as claimed in one of the preceding claims, **characterised in that** the mould cavity (23) in the injection mould (20) is formed by two mould halves (21, 22) and several displacement mean (25) are disposed between the two mould halves (21, 22) and co-operate with them, and the displacement means (25) move the first mould half (21) relative to the second mould half (22) simultaneously towards one another.

9. Method as claimed in one of claims 1 to 7, **characterised in that** the mould cavity (23) in the injection mould (20) is formed by two mould halves (21, 22) and a mould middle part (29) disposed between them, and several displacement means (25) are disposed between the two mould halves (21, 22) and co-operate with them, and the displacement means (25) move the two mould halves (21, 22) synchronously and in the opposite direction of movement relative to the mould middle part (29).

10. Injection mould (20) for producing a carrying element (1) from a plastic material, in particular a transport pallet, which injection mould (20) comprises two mould halves (20, 21) which bound a mould cavity (23) in the closed position, and the first mould half (20) is designed so that it can be adjusted relative to the other mould half (21), and several displacement means (25) are provided between the two mould halves (21, 22), and these displacement means (25) simultaneously cause the relative movement of the first mould half (21) with respect to the other mould half (22), and at least one line (31) opens into the mould cavity (23) which establishes a flow connection to a negative pressure generator (32), **characterised in that** the displacement means (25) are provided in the form of rack-and-pinion drives.

11. Injection mould (20) as claimed in claim 10, **characterised in that**, in addition to the two mould halves (20, 21), it has a mould middle part (29) disposed in between them and the latter bound the mould cavity (23) in the closed position, and the two mould halves (20, 21) are designed so that they can be adjusted relative to the mould middle part (29), and several displacement means (25) are disposed between the two mould halves (21, 22) and these displacement means (25) cause the relative movement of the two mould halves (21, 22) with respect to the mould middle part (29) synchronously and in the opposite direction of movement.

12. Injection mould (20) as claimed in claim 10 or 11, **characterised in that** the mould cavity (23) is designed so that its volume can be steplessly adjusted by the displacement means (25).

13. Injection mould (20) as claimed in claim 11 or 12, **characterised in that** each of the mould halves (20, 21) is provided with several racks (27) and oppositely lying racks (27) are respectively provided with a common driving gear.

14. Injection mould (20) as claimed in one of claims 11 to 13, **characterised in that** the mould middle part (29) comprises several core parts (30) which are designed to be adjusted relative to one another in the direction perpendicular to the opening direction of the mould halves (21, 22).

## Revendications

1. Procédé de réalisation d'un élément de support (1), en particulier une palette de transport, réalisé en matière plastique, dans lequel procédé dans un moule d'injection (20), comportant au moins deux demi-moules (21, 22), une cavité de moulage (23) avec des parois (33, 34) délimitant celle-ci est formée dans la position fermée desdits demi-moules, et le premier demi-moule (21) étant réalisé de manière à pouvoir se déplacer par rapport à l'autre demi-moule (22) et, à cette occasion, un volume de la cavité de moulage (23) pouvant être amené depuis un volume initial minimum dans une position initiale à un volume intermédiaire maximum dans une position intermédiaire et, ensuite, à un volume final, plus petit que le volume intermédiaire maximum, dans une position finale, et la matière plastique, prévue pour la réalisation de l'élément de support (1), étant introduite dans la cavité de moulage (23), sachant que, au moins pendant le processus d'injection de la matière plastique pour former l'élément de support (1), ladite cavité de moulage (23) est abaissée à une pression inférieure à la pression atmosphérique, **caractérisé en ce que** le processus de réglage de la cavité de moulage (23), depuis son volume initial minimum à son volume intermédiaire maximum, a déjà commencé lorsque la cavité de moulage (23) atteint un volume de remplissage qui se situe à l'intérieur d'une limite inférieure de 55 %, de préférence 70 %, et d'une limite supérieure de 98 %, de préférence 90 %, par rapport à son volume initial minimum dans la position initiale.

2. Procédé selon la revendication 1, **caractérisé en ce que**, avant le processus d'injection, la cavité de moulage (23) est déjà abaissée à une pression inférieure à la pression atmosphérique.

3. Procédé selon la revendication 1 ou 2, **caractérisé en ce que** le volume de la cavité de moulage (23) est réalisé de manière réglable en continu.

4. Procédé selon l'une quelconque des revendications précédentes, **caractérisé en ce que** le volume final de la cavité de moulage (23) est choisi plus grand que le volume initial minimum.

5. Procédé selon la revendication 1, **caractérisé en ce que**, pendant l'agrandissement du volume de la cavité de moulage (23), le processus d'injection est poursuivi jusqu'à ce que soit atteint le volume d'injection prédéfini.

6. Procédé selon l'une quelconque des revendications précédentes, **caractérisé en ce que** le processus d'injection est poursuivi à l'intérieur d'une limite inférieure de 5 %, de préférence 10 %, et une limite supérieure de 35 %, de préférence 30 % par rapport à la trajectoire d'ouverture totale entre le volume initial minimum et le volume intermédiaire maximum.

7. Procédé selon l'une quelconque des revendications précédentes, **caractérisé en ce que**, pendant les processus de réglage de la cavité de moulage (23), la matière plastique introduite dans celle-ci pour former l'élément de support (1), est aspirée sur la majeure partie des surfaces sur les parois (33, 34) de la cavité de moulage (23).

8. Procédé selon l'une quelconque des revendications précédentes, **caractérisé en ce que** la cavité de moulage (23) dans le moule d'injection (20) est formée par deux demi-moules (21, 22), et entre les deux demi-moules (21, 22) sont prévus plusieurs organes de réglage (25) coopérant avec ceux-ci, et les organes de réglage (25) déplacent simultanément l'un contre l'autre le premier demi-moule (21) par rapport à l'autre demi-moule (22).

9. Procédé selon l'une quelconque des revendications 1 à 7, **caractérisé en ce que** la cavité de moulage (23) dans le moule d'injection (20) est formée par deux demi-moules (21, 22), ainsi qu'un élément de moulage (29) disposé entre ceux-ci, et entre les deux demi-moules (21, 22) sont prévus plusieurs organes de réglage (25) coopérant avec ceux-ci, et les organes de réglage (25) déplacent les deux demi-moules (21, 22) de manière synchrone et dans une direction de déplacement en sens opposé par rapport l'élément de moulage (29).

10. Moule d'injection (20) pour la réalisation d'un élément de support (1), en particulier une palette de transport, réalisé en matière plastique, ledit moule d'injection (20) comportant deux demi-moules (21, 22) qui, dans la position fermée, délimitent une cavité de moulage (23), et le premier demi-moule (21) étant réalisé de manière à pouvoir se déplacer par rapport à l'autre demi-moule (22), plusieurs organes de réglage (25) étant prévus entre les deux demi-moules (21, 22), et lesdits organes de réglage (25) induisant simultanément le déplacement relatif du premier demi-moule (21) par rapport à l'autre demi-moule (22), et au moins une conduite (31), qui est en liaison fluidique avec un générateur de dépression (32), débouchant dans la cavité de moulage (23), **caractérisé en ce que** les organes de réglage (25) sont formés par des entraînements à crémaillère.

11. Moule d'injection (20) selon la revendication 10, **caractérisé en ce qu'**il comporte, en plus des deux demi-moules (21, 22), un élément de moulage (29), agencé entre ces derniers, et ceux-ci, dans la position fermée, délimitent la cavité de moulage (23), et les deux demi-moules (21, 22) sont réalisés de manière à pouvoir se déplacer par rapport à l'élément de moulage (29), plusieurs organes de réglage (25) étant prévus entre les deux demi-moules (21, 22), et lesdits organes de réglage induisant le déplacement relatif des deux demi-moules (21, 22) par rapport à l'élément de moulage (29) de manière synchrone et dans une direction de déplacement en sens opposé.

12. Moule d'injection (20) selon la revendication 10 ou 11, **caractérisé en ce que** la cavité de moulage (23) est réalisée avec un volume réglable en continu au moyen des organes de réglage (25).

13. Moule d'injection (20) selon la revendication 11 ou 12, **caractérisé en ce que** plusieurs crémaillères (27) sont associées à chacun des demi-moules (21, 22), et une roue d'entraînement commune est associée à des crémaillères (27) respectivement face à face.

14. Moule d'injection (20) selon l'une quelconque des revendications 11 à 13, **caractérisé en ce que** l'élément de moulage (29) comporte plusieurs noyaux (30), qui sont réalisés de manière réglable les uns par rapport aux autres dans une direction perpendiculaire à la direction d'ouverture des demi-moules (21, 22).
